# EUROPEAN PATENT APPLICATION

(11) **EP 4 748 893 A1**
(43) Date of publication of application: **27.05.2026**
(21) Application number: 24845536.2
(22) Date of filing: 19.07.2024
(51) Int. Cl.: C08L 101/00, C08F 20/20, C08G 59/68, C08K 3/01, C08K 5/3415, C09D 201/00, C09J 201/00, C09K 3/10

(54) **PHOTOCURABLE RESIN COMPOSITION, ADHESIVE, SEALING MATERIAL, COATING AGENT, CURED PRODUCT, SEMICONDUCTOR DEVICE, ELECTRONIC COMPONENT, AND CURING, BONDING, SEALING, AND COATING METHODS USING PHOTOCURABLE RESIN COMPOSITION**

(30) Priority: 21.07.2023 JP 2023119225
(71) Applicant: Namics Corporation, Niigata-shi, Niigata 950-3131 (JP)
(72) Inventor: IWAYA, Kazuki, Niigata-shi, Niigata 950-3131 (JP); SAITO, Nobuo, Niigata-shi, Niigata 950-3131 (JP); OTSUBO, Kodai, Niigata-shi, Niigata 950-3131 (JP); NAGATA, Rieko, Niigata-shi, Niigata 950-3131 (JP)
(74) Representative: Hoffmann Eitle
(86) International application number: PCT/JP2024/025880
(87) International publication number: WO 2025/023159

(57) **Abstract**

The object of the present invention is to provide a light-curable resin composition that does not require heat post-curing, an adhesive, sealant or coating agent containing the same, a cured product thereof, a semiconductor device and an electronic component containing the cured product, and curing, bonding, sealing, and coating methods using the light-curable resin composition.

Provided is a light-curable resin composition comprising
(A) a polymerizable compound,
(B) a photopolymerization initiator, and
(C) a photon upconversion material,
an adhesive, sealant or coating agent containing the same, a cured product thereof, a semiconductor device and an electronic component containing the cured product, and curing, bonding, sealing, and coating methods using the light-curable resin composition.

## Description

### Field of the Invention

The present invention relates to a light-curable resin composition, an adhesive, sealant or coating agent containing the same, a cured product thereof, a semiconductor device and an electronic component containing the cured product, and curing, bonding, sealing, and coating methods using the light-curable resin composition.

### Background Art

Adhesives that undergo temporary fixation by ultraviolet (UV) irradiation and post-curing by heat are used in many fields (e.g., Patent Documents 1 and 2). If fillers or similar substances are present in the adhesive, they may act as barriers to UV light. Additionally, if the area where the adhesive is applied has a complex shape, UV light may be blocked, potentially creating areas within the adhesive where UV light cannot reach. In such cases, that portion remains uncured, making it difficult to achieve the desired degree of curing. Therefore, this type of adhesive is used in applications where areas remain uncured due to lack of UV light exposure, with the purpose of achieving full cure through heat.

### PRIOR ART REFERENCE

### Patent Document

Patent Document 1: Japanese Patent Application Laid-Open No. 2009-51954
Patent Document 2: WO 2005/052021 A

### Summary of the Invention

On the other hand, from the perspective of improving productivity and considering applications to heat-sensitive components, adhesives that cure solely through light irradiation without requiring heat post-curing are desired.

Therefore, the object of the present invention is to provide a light-curable resin composition that does not require heat post-curing, an adhesive, sealant or coating agent containing the same, a cured product thereof, a semiconductor device and an electronic component containing the cured product, and curing, bonding, sealing, and coating methods using the light-curable resin composition.

Specific measures to solve the aforementioned problems are as follows.

The aspects of the present invention include the following curable resin compositions, adhesives, sealants or coating agents, cured products, semiconductor devices or electronic components, methods for producing cured products, methods for curing light-curable resin compositions, uses of light-curable resin compositions, bonding methods, sealing methods, and coating methods.
[1] A light-curable resin composition comprising
   (A) a polymerizable compound,
   (B) a photopolymerization initiator, and
   (C) a photon upconversion material.
[2] The light-curable resin composition as described in [1] above, wherein the (B) photopolymerization initiator is a photopolymerization initiator activated by light having a wavelength of 500 nm or less.
[3] The light-curable resin composition as described in [1] or [2] above, wherein the (B) photopolymerization initiator is a photo-radical polymerization initiator, a photo-acid generator, a photo-base generator, or any combination thereof.
[4] The light-curable resin composition as described in any one of [1] to [3] above, wherein an emission wavelength of the (C) photon upconversion material includes a wavelength of 500 nm or less.
[5] The light-curable resin composition as described in any one of [1] to [4] above, wherein the (A) polymerizable compound is a radical polymerizable compound, a cationic polymerizable compound, an anionic polymerizable compound, or any combination thereof.
[6] The light-curable resin composition as described in any one of [1] to [5] above, for use in curing by irradiation with light having a wavelength exceeding 500 nm.
[7] The light-curable resin composition as described in any one of [1] to [6] above, used for an adhesive, a sealant, or a coating agent for a semiconductor device or an electronic component.
[8] An adhesive, a sealant, or a coating agent comprising the light-curable resin composition as described in any one of [1] to [7] above.
[9] A cured product in which the light-curable resin composition as described in any one of [1] to [7] above or the adhesive, the sealant, or the coating agent as described in [8] above has been cured.
[10] A semiconductor device or an electronic component comprising the cured product as described in [9] above.
[11] A method for producing a cured product, comprising irradiating the light-curable resin composition as described in any one of [1] to [7] above or the adhesive, the sealant, or the coating agent as described in [8] with light having a wavelength exceeding 500 nm.
[12] A method for curing a light-curable resin composition, comprising irradiating the light-curable resin composition as described in any one of [1] to [7] above with light having a wavelength exceeding 500 nm.
[13] Use of the light-curable resin composition as described in any one of [1] to [7] above for curing by irradiation with light having a wavelength exceeding 500 nm.
[14] A method for bonding at least two parts using a light-curable resin composition, comprising:
   a step of applying the light-curable resin composition as described in any one of [1] to [7] above to at least one of the at least two parts; and
   a step of irradiating the at least one of the at least two parts, the light-curable resin composition, or both thereof with light having a wavelength exceeding 500 nm.
[15] A method for sealing a gap between parts or within part(s) using a light-curable resin composition, comprising:
   a step of applying or injecting the light-curable resin composition as described in any one of [1] to [7] above into the gap between the parts or within the part(s); and
   a step of irradiating the light-curable resin composition with light having a wavelength exceeding 500 nm.
[16] A method for coating surface of an object with a light-curable resin composition, comprising:
   a step of applying the light-curable resin composition as described in any one of [1] to [7] above to the object; and
   a step of irradiating the light-curable resin composition with light having a wavelength exceeding 500 nm.

According to the aspects of the present invention, a light-curable resin composition that does not require heat post-curing, an adhesive, sealant or coating agent containing the same, a cured product thereof, a semiconductor device and an electronic component containing the cured product, and curing, bonding, sealing, and coating methods using the light-curable resin composition can be provided.

### Mode for carrying out the Invention

In this description, "ultraviolet light" refers to light having a wavelength of 200 nm to 380 nm, "visible light" refers to light having a wavelength of 380 nm to 780 nm, "near-infrared light" refers to light having a wavelength of 780 nm to 2500 nm, and "(mid-)infrared light" refers to light having wavelengths of 2.5 µm to 25 µm.

In this description, following the common practice in the field of synthetic resins, the term "resin"-which typically refers to polymers (especially synthetic polymers)-may be used for components constituting a curable resin composition prior to curing, even when such components are not polymers, such as when they are prepolymer compounds prior to curing.

In this description, "(meth)acryloyl group" includes both methacryloyl and acryloyl groups. Furthermore, "(meth)acrylate compound" includes both acrylate and methacrylate compounds.

In this description, "light-curable resin composition" may sometimes be referred to simply as "resin composition."

### [Light-curable resin composition]

The light-curable resin composition which is one aspect of the present invention contains:
(A) a polymerizable compound,
(B) a photopolymerization initiator, and
(C) a photon upconversion material.
According to this aspect, a light-curable resin composition that does not require heat post-curing can be provided.

The present inventors focused on photon upconversion materials capable of converting long-wavelength light into short-wavelength light. Photon upconversion materials generate high-energy states through multiphoton excitation and triplet-triplet annihilation processes when irradiated with specific light. During the relaxation of these states, they emit light having a shorter wavelength than the incident light. The present inventors considered that by incorporating this photon upconversion material into a resin composition and irradiating the resin composition with long-wavelength light, the photon upconversion material would perform wavelength conversion within the resin composition, generating short-wavelength light to activate the photopolymerization initiator. The inventors confirmed that the curing of the resin composition proceeds through photon upconversion luminescence. The inventors also confirmed that even in the presence of a shielding material for UV irradiation, curing of the resin composition proceeds via photon upconversion luminescence, eliminating the need for heat post-curing.

### (A) Polymerizable compound

The light-curable resin composition of this aspect contains (A) a polymerizable compound (hereinafter also referred to as "component (A)"). (A) Polymerizable compounds impart curability and adhesive properties to resin compositions. In this aspect, the (A) polymerizable compound may be appropriately selected from a radical polymerizable compound, a cationic polymerizable compound, an anionic polymerizable compound, or any combination thereof, depending on the type of the (B) photopolymerization initiator described below.

Examples of radical polymerizable compounds include compounds containing unsaturated double bonds such as (meth)acrylate compounds, (meth)acrylamide compounds, cyanoacrylate compounds, maleimide compounds, vinyl ether compounds, styrene compounds, methylene malonates (2-methylene-1,3-dicarbonyl compounds and their derivatives), or mixtures of compounds containing unsaturated double bonds with thiol compounds (mixtures capable of an en-thiol reaction).

In this description, (meth)acrylate compounds refer to compounds containing at least one (meth)acryloyl group within their molecules, including monofunctional (meth)acrylate compounds having one (meth)acryloyl group and polyfunctional (meth)acrylate compounds having two or more (meth)acryloyl groups. Examples of the monofunctional (meth)acrylate compound include, but are not limited to: - esters of monovalent alcohols and (meth)acrylic acids such as ethyl (meth)acrylate, trifluoroethyl (meth)acrylate, diethylaminoethyl (meth)acrylate, dimethylaminoethyl (meth)acrylate, glycidyl (meth)acrylate, n-butyl (meth)acrylate, isobutyl (meth)acrylate, tert-butyl (meth)acrylate, isoamyl (meth)acrylate, cyclohexyl (meth)acrylate, 2-ethylhexyl (meth)acrylate, isodecyl (meth)acrylate, isobornyl (meth)acrylate, stearyl (meth)acrylate, lauryl (meth)acrylate, phenoxyethyl (meth)acrylate, benzyl (meth)acrylate, tetrahydrofurfuryl (meth)acrylate, ethoxydiethylene glycol (meth)acrylate, phenoxydiethylene glycol (meth)acrylate, phenoxypolyethylene glycol (meth)acrylate, butoxydiethylene glycol (meth)acrylate, methoxydipropylene glycol (meth)acrylate, methoxypolyethylene glycol (meth)acrylate, methoxytriethylene glycol (meth)acrylate, methoxypolyethylene glycol (meth)acrylate, 2-ethylhexyl diethylene glycol (meth)acrylate, 4-tert-butylcyclohexyl (meth)acrylate, and 3-phenoxybenzyl(meth)acrylate; mono(meth)acrylates of polyhydric alcohols or esters of monovalent alcohols and (meth)acrylic acids such as 2-hydroxyethyl(meth)acrylate, 2-hydroxypropyl(meth)acrylate, 2-hydroxybutyl(meth)acrylate, 2-hydroxy-3-phenoxypropyl(meth)acrylate, octyl acrylate, nonyl acrylate, isononyl acrylate, 3,3,5-trimethylcyclohexyl acrylate, cyclic trimethylolpropane formal acrylate, 1-naphthalene methyl(meth)acrylate, 1-ethylcyclohexyl (meth)acrylate, 1-methylcyclohexyl (meth)acrylate, 1-ethylcyclopentyl (meth)acrylate, 1-methylcyclopentyl(meth)acrylate, dicyclopentenyl(meth)acrylate, dicyclopentenyloxyethyl(meth)acrylate, dicyclopentanyl(meth)acrylate, nonylphenoxy polyethylene glycol(meth)acrylate, tetrahydrodicyclopentadienyl(meth)acrylate, 2-(o-phenylphenoxy)ethyl(meth)acrylate, isobornylcyclohexyl(meth)acrylate, (2-methyl-2-ethyl-1,3-dioxolan-4-yl)methyl(meth)acrylate, 1-adamantyl(meth)acrylate, 3-hydroxy-1-adamantyl(meth)acrylate, 2-methyl-2-adamantanyl(meth)acrylate, 2-ethyl-2-adamantanyl(meth)acrylate, 2-isopropyladamantan-2-yl(meth)acrylate, 3-hydroxy-1-adamantyl(meth)acrylate, (adamantan-1-yloxy)methyl(meth)acrylate, 2-isopropyl-2-adamantyl(meth)acrylate, 1-methyl-1-ethyl-1-adamantylmethanol(meth)acrylate, 1,1-diethyl-1-adamantylmethanol(meth)acrylate, 2-cyclohexylpropan-2-yl(meth)acrylate, 1-isopropylcyclohexyl(meth)acrylate, 1-methylcyclohexyl(meth)acrylate, 1-ethylcyclopentyl(meth)acrylate, 1-methylcyclohexyl(meth)acrylate, tetrahydropyranyl(meth)acrylate, tetrahydro-2-furanyl(meth)acrylate, 2-oxotetrahydrofuran-3-yl(meth)acrylate, (5-oxotetrahydrofuran-2-yl)methyl(meth)acrylate, (2-oxo-1,3-dioxolan-4-yl)methyl(meth)acrylate, N-acryloyloxyethyl hexahydrophthalimide, α-acryloyl-ω-methoxypoly(oxyethylene), 1-ethoxyethyl(meth)acrylate; and the like. Any one of them may be used alone, or two or more may be used in combination.

Examples of the polyfunctional (meth)acrylate compound include, but are not limited to, diacrylate and/or dimethacrylate of tris(2-hydroxyethyl)isocyanurate; triacrylate and/or trimethacrylate of tris(2-hydroxyethyl)isocyanurate; trimethylolpropane triacrylate and/or trimethacrylate, or oligomers thereof; pentaerythritol triacrylate and/or trimethacrylate, or oligomers thereof; polyacrylate and/or polymethacrylate of dipentaerythritol; tris(acryloxyethyl)isocyanurate; caprolactone-modified tris(acryloxyethyl)isocyanurate; caprolactone-modified tris(methacryloxyethyl)isocyanurate; polyacrylate and/or polymethacrylate of alkyl-modified dipentaerythritol; polyacrylate and/or polymethacrylate of caprolactone-modified dipentaerythritol; ethoxylated bisphenol A diacrylate and/or ethoxylated bisphenol A dimethacrylate; dihydrocyclopentadiethyl acrylate and/or dihydrocyclopentadiethyl methacrylate, and polyester acrylate and/or polyester methacrylate, dimethylol-tricyclodecanediacrylate, poly(meth)acrylate of ditrimethylolpropane, polyurethanes having two or more (meth)acryloyl groups per molecule, polyesters having two or more (meth)acryloyl groups per molecule, phenoxyethyl acrylate, isobornyl acrylate, phenoxydiethylene glycol (meth)acrylate, 4-tert-butylcyclohexyl (meth)acrylate, half epoxy acrylate (partially esterified epoxy resin), and the like.

Any one of the above mentioned (meth)acrylate compounds may be used alone, or two or more may be used in combination for the (meth)acrylate compound.

Examples of commercially available products of the (meth)acrylate compound include, but are not limited to, polyester acrylate from DAICEL-ALLNEX LTD. (trade name: EBECRYL810), ditrimethylolpropane tetraacrylate from DAICEL-ALLNEX LTD. (trade name: EBECRYL140), polyester acrylate from Toagosei Co., Ltd. (trade name: M7100), dimethylol tricyclodecane diacrylate from KYOEISHA CHEMICAL Co., LTD (trade name: Light Acrylate DCP-A), neopentylglycol modified trimethylolpropanediacrylate from Nippon Kayaku Co., Ltd. (trade name: Kayarad R-604), and the like.

(Meth)acrylamide compounds are compounds containing at least one acrylamide group (H₂C=CHCONH-) or methacrylamide group ((H₂C=C(CH₃)CONH-). Examples of (meth)acrylamide compounds include, but are not limited to, N,N'-methylenebis(meth)acrylamide, N,N'-ethylenebis(meth)acrylamide, and 1,2-bis(meth)acrylamidoethylene glycol.

Cyanacrylate compounds may be selected from known compounds represented by the formula H₂C=C(CN)-COOR. In the formula, R is an ester residue such as an alkyl group, cycloalkyl group, alkenyl group, cycloalkenyl group, alkynyl group, or aryl group. The number of carbon atoms in the ester residue is not particularly limited, but those having 1 to 8 carbon atoms may typically be used. Ester residues consisting of substituted hydrocarbon groups, such as alkoxyalkyl groups or trialkylsilylalkyl groups, may also be used.

Examples of cyanoacrylate compounds include, but are not limited to, alkyl and cycloalkyl cyanoacrylates such as methyl cyanoacrylate, ethyl cyanoacrylate, propyl cyanoacrylate, butyl cyanoacrylate and cyclohexyl cyanoacrylate, alkenyl and cycloalkenyl cyanoacrylates such as allyl cyanoacrylate, methallyl cyanoacrylate and cyclohexenyl cyanoacrylate, alkynyl cyanoacrylates such as propargyl cyanoacrylate, aryl cyanoacrylates such as phenyl cyanoacrylate and toluyl cyanoacrylate, methoxyethyl cyanoacrylate, ethoxyethyl cyanoacrylate and furfuryl cyanoacrylate containing heteroatoms, trimethylsilyl methyl cyanoacrylate, trimethylsilyl ethyl cyanoacrylate, trimethylsilyl propyl cyanoacrylate and dimethylvinylsilyl methyl cyanoacrylate containing silicon.

Any one of them may be used alone, or two or more may be used in combination.

In this description, a maleimide compound is a compound having at least one maleimide group. Maleimide compounds include monofunctional maleimide compounds having one maleimide group and polyfunctional maleimide compounds having two or more maleimide groups. In particular, maleimide compounds having two maleimide groups are sometimes referred to as bismaleimide compounds. Examples of bismaleimide compounds include, but are not limited to, N,N'-(4,4'-diphenylmethane) bismaleimide, bisphenol A diphenyl ether bismaleimide, 3,3'-dimethyl-5,5'-diethyl-4,4'-diphenylmethane bismaleimide, 4-methyl-1,3-phenylene bismaleimide, 1,6'-bismaleimido-(2,2,4-trimethyl)hexane, bis-(3-ethyl-5-methyl-4-maleimidophenyl)methane, m-phenylene bismaleimide (N,N'-1,3-phenylene bismaleimide), 1,6-bismaleimidohexane, 1,2-bismaleimidoethane (N,N'-ethylenedimayimide), N,N'-(1,2-phenylene)bismaleimide, N,N'-1,3-phenylenedimaleimide, N,N'-1,4-phenylenedimaleimide, N,N'-(sulfonyl-di-*p-*phenylene)dimaleimide, N,N'-[3,3'-(1,3-phenylenedioxy)diphenyl]bismaleimide, N,N'-[4,4'-(1,3-phenyleneoxy)diphenyl]bis(maleimide), 4,4'-dimalemido-diphenyl ether. Any one of them may be used alone, or two or more may be used in combination.

When a low modulus of elasticity at room temperature is required for the cured product of the resin composition, it is preferred that the bismaleimide compound be a bismaleimide compound with a hydrocarbon group derived from a dimer acid. Such bismaleimide compounds are described, for example, in JP 2015-193725 A. Commercial products of bismaleimide compounds with hydrocarbon groups derived from dimer acids include, but are not limited to, the trade name "BMI-689", the trade name "BMI-1500", the trade name "BMI-1700", which are liquid at 25°C, or the trade name "BMI-3000" which is solid at 25°C, all of which are available from Designer Molecules Inc. Any one of them may be used alone, or two or more may be used in combination.

Examples of the monofunctional maleimide compound include, but are not limited to, monofunctional aliphatic maleimide compounds such as N-n-butylmaleimide, N-hexylmaleimide, 2-maleimidoethyl-ethyl carbonate, 2-maleimidoethyl-propyl carbonate, and N-ethyl-(2-maleimidoethyl)carbamate; alicyclic monofunctional maleimide compounds such as N-cyclohexylmaleimide; N-aryl maleimides such as N-phenylmaleimide; and N-alkylmaleimides such as N-benzylmaleimide. The aliphatic maleimides and alicyclic maleimides may optionally contain substituent(s), which may include, for example, phenyl groups, benzyl groups, hydroxyl groups, and the like. The N-arylmalemide and N-alkylmalemide may optionally contain substituents, which may include, but are not limited to, for example, alkyl groups, nitro groups, hydroxyl groups, alkoxy groups, carboxyl groups, halogen groups, and the like. Any one of them may be used alone, or two or more may be used in combination. Examples of commercially available monofunctional maleimides include, but are not limited to, Imilex^{®}-C and Imilex^{®}-P (both available from Nippon Shokubai Co., Ltd.), and O-CPMI (available from DAIWA KASEI INDUSTRIAL Co., Ltd.).

Vinyl ether compounds are compounds containing at least one vinyl ether group (H₂C=CH-O-). Examples of vinyl ether compounds include, but are not limited to, ethyl vinyl ether, triethylene glycol divinyl ether, trimethylolpropane trivinyl ether, hydroxybutyl vinyl ether, dodecyl vinyl ether, cyclohexyl vinyl ether, 1,4-butanediol divinyl ether, nonanediol divinyl ether, cyclohexanediol divinyl ether, cyclohexanedimethanol divinyl ether, and the like. Any one of them may be used alone, or two or more may be used in combination.

Styrene compounds are compounds containing at least one styrene group (H₂C=CH-C₆H₅-). Examples of styrene compounds include, but are not limited to, styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, N,N-diethyl-4-aminoethylstyrene, 4-methoxystyrene, and the like. Any one of them may be used alone, or two or more may be used in combination.

Methylene malonates are malonates containing at least one methylene group within their molecules. Examples include monofunctional methylene malonates having one methylene group and polyfunctional methylene malonates having two or more methylene groups. Methylene malonates are preferably those having a molecular weight of 220 or more. There are no particular restrictions on the types of methylene malonates that can be used. In addition to the compounds described in WO 2018/212330A1, various other disclosed methylene malonates can be employed. Any one of methylene malonates may be used alone, or two or more may be used in combination.

The thiol compound in a mixture of a compound having an unsaturated double bond and a thiol compound is a compound containing at least one thiol group, wherein said thiol group is capable of undergoing a radical addition reaction (en-thiol reaction) with the unsaturated double bond of the compound having an unsaturated double bond. The thiol compound is broadly classified into a thiol compound having a hydrolyzable substructure such as an ester bond in its molecule (i.e., a hydrolyzable thiol compound) and a thiol compound without such a substructure (i.e., a nonhydrolyzable thiol compound).

Examples of the hydrolyzable thiol compound include trimethylolpropane tris(3-mercaptopropionate) (trade name: TMMP; available from SC Organic Chemical Co., Ltd.), tris[(3-mercaptopropionyloxy)-ethyl]-isocyanurate (trade name: TEMPIC; available from SC Organic Chemical Co., Ltd.), pentaerythritol tetrakis(3-mercaptopropionate) (trade name: PEMP; available from SC Organic Chemical Co., Ltd.), tetraethyleneglycol bis(3-mercaptopropionate) (trade name: EGMP-4; available from SC Organic Chemical Co., Ltd.), dipentaerythritol hexakis(3-mercaptopropionate) (trade name: DPMP; available from SC Organic Chemical Co., Ltd.), pentaerythritol tetrakis(3-mercaptobutyrate) (trade name: Karenz MT^{®} PE1; available from Resonac Corporation), 1,3,5-tris(3-mercaptobutyryloxyethyl)-1,3,5-triazine-2,4,6(1H,3H,5H)-trione (trade name: Karenz MT^{®} NR1; available from Resonac Corporation), and the like. Any one of them may be used alone, or two or more may be used in combination.

Examples of the non-hydrolyzable polyfunctional thiol compound include 1,3,4,6-tetrakis(2-mercaptoethyl)glycoluril (trade name: TS-G, available from Shikoku Chemicals Corporation), 1,3,4,6-tetrakis(3-mercaptopropyl)glycoluril (trade name: C3 TS-G, available from Shikoku Chemicals Corporation), 1,3,4,6-tetrakis(mercaptomethyl)glycoluril, 1,3,4,6-tetrakis(mercaptomethyl)-3a-methylglycoluril, 1,3,4,6-tetrakis(2-mercaptoethyl)-3a-methylglycoluril, 1,3,4,6-tetrakis(3-mercaptopropyl)-3a-methylglycoluril, 1,3,4,6-tetrakis(mercaptomethyl)-3a, 6a-dimethylglycoluril, 1,3,4,6-tetrakis(2-mercaptoethyl)-3a,6a-dimethylglycoluril, 1,3,4,6-tetrakis(3-mercaptopropyl)-3a,6a-dimethylglycoluril, 1,3,4,6-tetrakis(mercaptomethyl)-3a,6a-diphenylglycoluril, 1,3,4,6-tetrakis(2-mercaptoethyl)-3a,6a-diphenylglycoluril, 1,3,4,6-tetrakis(3-mercaptopropyl)-3a,6a-diphenylglycoluril, tris(3-mercaptopropyl)isocyanurate, 1,3,5-tris[3-(2-mercaptoethylsulfanyl)propyl isocyanurate, 1,3,5-tris[2-(3-mercaptopropoxy)ethyl]isocyanurate, pentaerythritol tripropanethiol (trade name: PEPT, available from SC Organic Chemical Co., Ltd.), 3-[2,3-bis(3-sulfanylpropoxy)propoxy]propane-1-thiol, 1,2,3-tris(3-mercapto-propoxy)propane, 3-[2,2-bis[(3-mercapto-propoxy)methyl]butoxy]-1-propanethiol, pentaerythritol tetrapropanethiol, 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, 1,1,3,3-tetrakis(mercaptomethylthio)propane, 1,1,2,2-tetrakis(mercaptomethylthio)ethane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 3-mercaptomethylthio-1,7-dimercapto-2,6-dithiaheptane, 3,6-bis(mercaptomethylthio)-1,9-dimercapto-2,5,8-trithianonane, 3-mercaptomethylthio-1,6-dimercapto-2,5-dithiahexane, 1,1,9,9-tetrakis(mercaptomethylthio)-5-(3,3-bis(mercaptomethylthio)-1-thiapropyl) 3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathianonadecane, 9-(2,2-bis(mercaptomethylthio)ethyl)-3,5,13,15-tetrakis(mercaptomethylthio)-1,17-dimercapto-2,6,8,10,12,16-hexathiaheptadecane, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5,7,10,12,15-hexathiahexadecane, 8-[bis(mercaptomethylthio)methyl]-3,4,12,13-tetrakis(mercaptomethylthio)-1,15-dimercapto-2,5,7,9,11,14-hexathiapentadecane, 4,6-bis[3,5-bis(mercaptomethylthio)-7-mercapto-2,6-dithiaheptylthio]-1,3-dithiane, 4-[3,5-bis(mercaptomethylthio)-7-mercapto-2,6-dithiaheptylthio]-6-mercaptomethylthio-1,3-dithiane, 1,1-bis[4-(6-mercaptomethylthio)-1,3-dithianylthio]-1,3-bis(mercaptomethylthio)propane, 1-[4-(6-mercaptomethylthio)-1,3-dithianylthio]-3-[2,2-bis(mercaptomethylthio)ethyl]-7,9-bis(mercaptomethylthio)-2,4,6,10-tetrathiaundecane, 3-[2-(1,3-dithietanyl)]methyl-7,9-bis(mercaptomethylthio)-1,11-dimercapto-2,4,6,10-tetrathiaundecane, 9-[2-(1,3-dithietanyl)]methyl-3,5,13,15-tetrakis(mercaptomethylthio)-1,17-dimercapto-2,6,8,10,12,16-hexathiaheptadecane, 3-[2-(1,3-dithietanyl)]methyl-7,9,13,15-tetrakis(mercaptomethylthio)-1,17-dimercapto-2,4,6,10,12,16-hexathiaheptadecane, 4,6-bis[4-(6-mercaptomethylthio)-1,3-dithianylthio]-6-[4-(6-mercaptomethylthio)-1,3-dithianylthio]-1,3-dithiane, 4-[3,4,8,9-tetrakis(mercaptomethylthio)-11-mercapto-2,5,7,10-tetrathiaundecyl]-5-mercaptomethylthio-1,3-dithiolane, 4,5-bis[3,4-bis(mercaptomethylthio)-6-mercapto-2,5-dithiahexylthio]-1,3-dithiolane, 4-[3,4-bis(mercaptomethylthio)-6-mercapto-2,5-dithiahexylthio]-5-mercaptomethylthio-1,3-dithiolane, 4-[3-bis(mercaptomethylthio)methyl-5,6-bis(mercaptomethylthio)-8-mercapto-2,4,7-trithiaoctyl]-5-mercaptomethylthio-1,3-dithiolane, 2-{bis[3,4-bis(mercaptomethylthio)-6-mercapto-2,5-dithiahexylthio]methyl}-1,3-dithietane, 2-[3,4-bis(mercaptomethylthio)-6-mercapto-2,5-dithiahexylthio]mercaptomethylthiomethyl-1,3-dithietane, 2-[3,4,8,9-tetrakis(mercaptomethylthio)-11-mercapto-2,5,7,10-tetrathiaundecylthio]mercaptomethylthiomethyl-1,3-dithietane, 2-[3-bis(mercaptomethylthio)methyl-5,6-bis(mercaptomethylthio)-8-mercapto-2,4,7-trithiaoctyl]mercaptomethylthiomethyl-1,3-dithietane, 4-{1-[2-(1,3-dithietanyl)]-3-mercapto-2-thiapropylthio}-5-[1,2-bis(mercaptomethylthio)-4-mercapto-3-thiabutylthio]-1,3-dithiolane, various bifunctional thiol compounds disclosed in wo 2019/082962, such as 2,2'-[cyclohexylidene bis(thio-2,1-ethanediylthio)]bis[ethanethiol], 4,4'-[(1,3-phenylene)bis(oxy)]bis[1-butanethiol], and the like, and dimers, trimers, and tetramers of said thiol compounds. Any one of them may be used alone, or two or more may be used in combination.

Cationic polymerizable compounds are compounds containing one or more cationic polymerizable groups within their molecules. Cationic polymerizable groups include, but are not limited to, epoxy groups, oxetanyl groups, and vinyl ether groups. Examples of cationic polymerizable compounds include, but are not limited to, epoxy compounds, oxetane compounds, polystyrene-based compounds, vinyl ether compounds, and others.

Epoxy compounds include monofunctional epoxy compounds having one epoxy group and polyfunctional epoxy compounds having two or more epoxy groups. Polyfunctional epoxy compounds are broadly classified into aromatic polyfunctional epoxy compounds and polyfunctional epoxy compounds without an aromatic ring.

Specific examples of polyfunctional epoxy compounds having an aromatic ring skeleton include, but are not limited to, bisphenol A-type epoxy resin (such as EPICLON^{®} 850, 850-S, EXA-850CRP, and EXA-8067, available from DIC Corporation), special epoxy resin containing a compound in which a polyalkylene oxide structure is added to bisphenol A skeleton (such as AER-9000, available from Asahi Kasei Corporation, EP-4000S, EP-4003S, and EP-4010S, available from ADEKA CORPORATION), bisphenol F-type epoxy resin (such as EPICLON^{®} 830-S, and EXA-830LVP, available from DIC Corporation), bisphenol AD-type epoxy resin, bisphenol S-type epoxy resin, naphthalene-type epoxy resin (such as EPICLON^{®} HP-4032D, and HP-720H, available from DIC Corporation), phenol-novolac-type epoxy resin (such as EPICLON^{®} N-740, and N-770, available from DIC Corporation), creosol-novolak-type epoxy resin (such as EPICLON^{®} N-660, N-670, and N-655-EXP-S, available from DIC Corporation), and the like. Specific examples of polyfunctional epoxy compounds contained in polyfunctional epoxy resins include glycidyl ether of tetra(hydrophenyl)alkane, glycidyl ether of tetrahydroxybenzophenone, epoxidized polyvinylphenol, and the like. Examples of compounds included in monofunctional epoxy resins include p-tert-butylphenyl glycidyl ether (such as ADEKA Glycirol^{®} ED-509E, ED-509S, etc., available from ADEKA CORPORATION).

As epoxy resins having an alicyclic skeleton, those containing an alicyclic skeleton within a single molecule are suitable, including cycloalkylene oxide compounds wherein the epoxy group is formed by two carbon atoms that constitute the alicyclic structure and one oxygen atom. Epoxy resins having an alicyclic skeleton may also contain epoxy compounds having an alicyclic skeleton. Epoxy compounds having an alicyclic skeleton include cyclohexane-based, cyclohexyl methyl ester-based, cyclohexyl methyl ether-based, spiro-based, and tricyclodecane-based epoxy compounds. Specific examples of epoxy resins having an alicyclic skeleton include 3',4'-epoxycyclomethyl-3,4-epoxycyclohexanecarboxylate (such as CELLOXIDE^{®} 2021P available from Daicel Corporation), (3,3',4,4'-diepoxy)bicyclohexyl (such as CELLOXIDE^{®} 8010 available from Daicel Corporation), 1,2:8,9-diepoxy-limonene, 1,2-epoxy-4-vinylcyclohexane, 1,2-epoxy-4-(2-oxiranyl)cyclohexane adduct of 2,2-bis(hydroxymethyl)-1-butanol (such as EHPE3150 available from Daicel Corporation).

Examples of aliphatic epoxy resins include polyglycidyl ethers of polyhydric alcohols or their alkylene oxide adducts. Specific examples of the aliphatic epoxy compounds contained in aliphatic epoxy resins include ethylene glycol diglycidyl ether, diethylene glycol diglycidyl ether, propylene glycol diglycidyl ether, 1,4-butanediol diglycidyl ether, neopentyl glycol diglycidyl ether, 1,6-hexanediol diglycidyl ether, glycerol diglycidyl ether, trimethylolpropane triglycidyl ether (e.g., Epolight 100MF available from KYOEISHA CHEMICAL Co., LTD.), and polyethylene glycol diglycidyl ether. Examples of aliphatic cyclic epoxy resins include hydrogenated bisphenol A diglycidyl ether (such as jER YX8000 available from Mitsubishi Chemical Corporation).

The epoxy equivalent of the epoxy compound is preferably 90 g/eq to 1000 g/eq. The epoxy equivalent of the epoxy compound may be 800 g/eq or less, 600 g/eq or less, 500 g/eq or less, 400 g/eq or less, 120 g/eq or more, 130 g/eq or more, 150 g/eq or more, 180 g/eq or more, or 200 g/eq or more.

Specific examples of oxetane compounds include 3-ethyl-3-hydroxymethyloxetane (oxetane alcohol) (e.g., OXT-101 available from Toagosei Co., Ltd.), 2-ethylhexyloxetane (e.g., OXT-212 available from Toagosei Co., Ltd.), xylylenbisoxetane (e.g., OXT-121 available from Toagosei Co., Ltd.), 3-ethyl-3-{[(3-ethyloxetan-3-yl)methoxy]methyl}oxetane (e.g., OXT-221 available from Toagosei Co., Ltd.), oxetanyl-silsesquioxane (e.g., OXT-191 available from Toagosei Co., Ltd.), phenol novolak oxetane (e.g., PHOX available from Toagosei Co., Ltd.), and 3-ethyl-3-phenoxymethyloxetane (e.g., OXT-211 available from Toagosei Co., Ltd.).

The oxetane equivalent of oxetane compounds is preferably 90 g/eq to 500 g/eq, and may also be 100 g/eq to 300 g/eq.

Examples of vinyl ether compounds include, but are not limited to, ethyl vinyl ether, triethylene glycol divinyl ether, trimethylolpropane trivinyl ether, hydroxybutyl vinyl ether, 1,4-cyclohexanedimethanol vinyl ether, dodecyl vinyl ether, cyclohexyl vinyl ether, and the like. Any one of them may be used alone, or two or more may be used in combination.

Examples of anionic polymerizable compounds include epoxy compounds as described above as examples of cationic polymerizable compounds, and their curing agents such as thiol curing agents, phenol curing agents, acid anhydride curing agents, and amine curing agents. Additionally, the methylene malonates cited as examples of the aforementioned radical polymerizable compounds can also be listed as anionic polymerizable compounds. Furthermore, the (meth)acrylate compounds shown as examples of the aforementioned radical polymerizable compounds can also be listed as anionic polymerizable compounds when used in combination with thiol compounds. Any one of them may be used alone, or two or more may be used in combination.

The (A) polymerizable compound may be any one of a radical polymerizable compound, a cationic polymerizable compound, or an anionic polymerizable compound, or any combination thereof.

The content of the (A) polymerizable compound in the resin composition may be 1 to 99 parts by mass relative to 100 parts by mass of the total resin composition. In one embodiment, the content of the (A) polymerizable compound is preferably 5 to 50 parts by mass and more preferably 7 to 30 parts by mass, relative to 100 parts by mass of the total resin composition. The resin composition of this embodiment can cure solely by light curing even when a large amount of shielding agents such as fillers are present. In another embodiment, the content of the (A) polymerizable compound in the resin composition is preferably 30 to 99 parts by mass, more preferably 50 to 99 parts by mass, and further preferably 60 to 99 parts by mass, relative to 100 parts by mass of the total resin composition. Furthermore, the content of the (A) polymerizable compound in the resin composition is preferably 75 to 99 parts by mass, more preferably 80 to 99.5 parts by mass, and further preferably 85 to 98 parts by mass, relative to 100 parts by mass of the total organic content in the resin composition (excluding low stress-inducing materials such as organic fillers and elastomers). Furthermore, the amount of component (A) is preferably 75 to 99.9 parts by mass, more preferably 80 to 99.5 parts by mass, and further preferably 85 to 99 parts by mass, relative to total of 100 parts by mass of components (A), (B), and (C).

### (B) Photopolymerization initiator

The resin composition of the present aspect comprises (B) a photopolymerization initiator (hereinafter also referred to as "component (B)"). A photopolymerization initiator is a reagent that absorbs light to generate active species such as radicals, cations, or anions, thereby promoting the polymerization of polymerizable compounds. In this aspect, the (B) photopolymerization initiator is preferably a photopolymerization initiator activated by light having a wavelength of 500 nm or less (i.e., generating active species), and is activated by light having a wavelength of 500 nm or less that has been wavelength-converted by the (C) photon upconversion material described below. The (B) photopolymerization initiator is more preferably activated by light having a wavelength of 450 nm or less, is further preferably activated by light having a wavelength of 440 nm or less, and is particularly preferably activated by light having a wavelength of 430 nm or less. By matching the absorption characteristics of the photopolymerization initiator with the wavelength of light generated by the photon upconversion material, the efficiency of the polymerization reaction can be increased. The (B) photopolymerization initiator may be appropriately selected from a photo-radical polymerization initiator, a photo-acid generator, a photo-base generator, or any combination thereof.

Photo-radical polymerization initiators absorb light to generate radicals as active species, thereby promoting the polymerization of radical-polymerizable compounds. Examples of photo-radical polymerization initiators include, but are not limited to, alkylphenone compounds, acylphosphine oxide compounds, oxime ester compounds, and compounds having photosensitive sites and peroxide structures.

Examples of the alkylphenone compounds include, but are not limited to, benzil dimethyl ketals, such as 2,2-dimethoxy-1,2-diphenylethan-1-one (commercially available as Omnirad 651 from IGM Resins B.V.); α-aminoalkylphenones such as 2-methyl-2-morpholino(4-thiomethylphenyl)propan-1-one (commercially available as Omnirad 907 from IGM Resins B.V.); α-hydroxyalkylphenones such as 1-hydroxycyclohexyl-phenyl-ketone (commercially available as Omnirad 184 from IGM Resins B.V.); 2-dimethylamino-2-(4-methyl-benzyl)-1-(4-morpholin-4-yl-phenyl)-butan-1-one (commercially available as Omnirad 379 EG from IGM Resins B.V.), 2-benzil-2-(dimethylamino)-4'-morpholinobutyrophenone (commercially available as Omnirad 369 from IGM Resins B.V.), and the like. Any one of them may be used alone, or two or more may be used in combination.

Examples of the acylphosphine oxide compounds include, but are not limited to, 2,4,6-trimethylbenzoyl-diphenyl phosphine oxide (commercially available as Omnirad TPO H from IGM Resins B.V.), bis(2,4,6-trimethylbenzoyl)-phenylphosphine oxide (commercially available as Omnirad 819 from IGM Resins B.V.), and the like. Any one of them may be used alone, or two or more may be used in combination.

Examples of oxime ester compounds include, but are not limited to, 1,2-octanedione, 1-[4-(phenylthio)-, 2-(O-benzoyloxime)] (trade name: Irgacure OXE-01, from BASF), ethanone, 1-[9-ethyl-6-(2-methylbenzoyl)-9H-carbazol-3-yl]-, 1-(O-acetyl oxime) (trade name: Irgacure OXE-02, from BASF), metanon, etanon, 1-[9-ethyl-6-(1,3-dioxolan, 4-(2-methoxyphenoxy)-9H-carbazol-3-yl]-, 1-(O-acetyl)oxime] (Trade name: ADEKA OPT-N-1919, from ADEKA Corporation), etc. Any one of them may be used alone, or two or more may be used in combination.

Examples of compounds having photosensitive sites and peroxide structures, or their commercially available products, include, but are not limited to, 3,3',4,4'-tetrakis(tert-butylperoxycarbonyl)benzophenone (BTTB), PERDUAL TA, and PERDUAL TX (all available from NOF Corporation).

In addition to the photo-radical polymerization initiators mentioned above, other examples of the photo-radical polymerization initiators include, but are not limited to, 2-hydroxy-2-methyl-1-phenylpropan-1-one, diethoxyacetophenone, 1-(4-isopropylphenyl)-2-hydroxy-2-methylpropan-1-one, 1-(4-dodecylphenyl)-2-hydroxy-2-methylpropan-1-one, 4-(2-hydroxyethoxy)-phenyl(2-hydroxy-2-propyl)ketone, 2-methyl-1-[4-(methylthio)phenyl]-2-morpholinopropan-1-one, benzoin, benzoin methyl ether, benzoin ethyl ether, benzoin isopropyl ether, benzoin n-butyl ether, benzoin phenyl ether, benzil dimethyl ketal, benzophenone, benzoylbenzoate, methyl benzoylbenzoate, 4-phenylbenzophenone, hydroxybenzophenone, acrylated benzophenone, 4-benzoyl-4'-methyldiphenylsulfide, 3,3'-dimethyl-4-methoxybenzophenone, thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, 2,4,6-trimethylbenzoyl diphenylphosphine oxide, methylphenylglyoxylate, benzil, camphorquinone, and the like. Any one of them may be used alone, or two or more may be used in combination.

Any one of the photo-radical polymerization initiators may be used alone, or two or more may be used in combination.

The content of the photo-radical polymerization initiator in the resin composition is preferably 0.1 to 10 parts by mass, and more preferably 0.2 to 8 parts by mass, relative to 100 parts by mass of the total radical-polymerizable compounds, from the viewpoint of photo-irradiation reactivity.

Photo-acid generators absorb light to generate acid as an active species, thereby promoting the polymerization of cationic polymerizable compounds. As photo-acid generators, various onium salts can be used, in which BF₄⁻, SbF₆⁻, AsF₆⁻, B(C₆F₅)₄⁻, Ga(C₆F₅)₄⁻, C(CF₃SO₂)₃⁻, [P(R¹)ₐF₆₋ₐ]⁻, [C(R¹SO₂)₃]⁻, or [N(R¹SO₂)₂]⁻, etc. (wherein, R¹ is independently an alkyl group in which at least part of the hydrogen atoms are substituted with fluorine atoms; a is an integer from 0 to 5; and when a is an integer of 2 or more, multiple R¹ groups present may be identical or different.), are counter anions, while sulfonium cations, iodonium cations, ammonium cations, phosphonium cations, and the like are cationic moiety.

Examples of iodonium cations include iodonium ions such as diphenyl iodonium, di-p-tolyl iodonium, bis(4-dodecylphenyl) iodonium, bis(4-methoxyphenyl) iodonium, (4-octyloxyphenyl)phenyl iodonium, bis(4-decyloxy)phenyl iodonium, 4-(2-hydroxytetradecyloxy)phenylphenyl iodonium, 4-isopropylphenyl(p-tolyl) iodonium, and 4-isobutylphenyl(p-tolyl) iodonium.

Examples of sulfonium ions include triaryl sulfonium such as triphenylsulfonium, tri-p-tolylsulfonium, tri-o-tolylsulfonium, tris(4-methoxyphenyl)sulfonium, 1-naphthyl diphenylsulfonium, 2-naphthyl diphenylsulfonium, tris(4-fluorophenyl)sulfonium, tri-1-naphthylsulfonium, tri-2-naphthylsulfonium, tris(4-hydroxyphenyl)sulfonium, 4-(phenylthio)phenyl diphenylsulfonium, 4-(p-tolylthio)phenyl-di(p-tolyl)sulfonium, 4-(4-methoxyphenylthio)phenylbis(4-methoxyphenyl)sulfonium, 4-(phenylthio)phenylbis(4-fluorophenyl)sulfonium, 4-(phenylthio)phenylbis(4-methoxyphenyl)sulfonium, 4-(phenylthio)phenyl-di-p-tolylsulfonium, [4-(4-biphenylthio)phenyl]-4-biphenylphenylsulfonium, [4-(2-thioxanthonylthio)phenyl]diphenylsulfonium, bis[4-(diphenylsulfonio)phenyl] sulfide, bis[4-(2-hydroxyethoxy)phenyl]sulfonio]phenyl]sulfide, bis{4-[bis(4-fluorophenyl)sulfonyl]phenyl} sulfide, bis{4-[bis(4-methylphenyl)sulfonyl]phenyl} sulfide, bis{4-[bis(4-methoxyphenyl)sulfonyl]phenyl} sulfide, 4-(4-benzoyl-2-chlorophenylthio)phenylbis(4-fluorophenyl)sulfonium, 4-(4-benzoyl-2-chlorophenylthio)phenyl diphenylsulfonium, 4-(4-benzoylphenylthio)phenylbis(4-fluorophenyl)sulfonium, 4-(4-benzoylphenylthio)phenyl diphenylsulfonium, 7-isopropyl-9-oxo-10-thia-9,10-dihydroanthracene-2-yl di-p-tolylsulfonium, 7-isopropyl-9-oxo-10-thia-9,10-dihydroanthracene-2-yl diphenylsulfonium, 2-(di-p-tolyl)sulfonio thioxanthone, 2-[(diphenyl)sulfonio]thioxanthon, 4-(9-oxo-9H-thioxanthen-2-yl)thiophenyl-9-oxo-9H-thioxanthen-2-ylphenylsulfonium, 4-(4-(4-t-butylbenzoyl)phenylthio)phenyl-di(p-tolylsulfonium), 4-(4-(4-t-butylbenzoyl)phenylthio)phenyl diphenylsulfonium, 4-[4-(benzoylphenylthio)]phenyl-di-p-tolylsulfonium, 4-(4-(benzoylphenylthio))phenyl diphenylsulfonium, 5-(4-methoxyphenyl) thianthrenium, 5-phenyl thianthrenium, 5-tyril thianthrenium, 5-(4-ethoxyphenyl) thianthrenium, and 5-(2,4,6-trimethylphenyl) thianthrenium.

Examples of ammonium cations include pyrrolidinium such as N,N-dimethylpyrrolidinium, N-ethyl-N-methylpyrrolidinium, and N,N-diethylpyrrolidinium, imidazolinium such as N,N'-dimethylimidazolinium, N,N'-diethylimidazolinium, N-ethyl-N'-methylimidazolinium, 1,3,4-trimethylimidazolinium, and 1,2,3,4-tetramethylimidazolinium, tetrahydropyridinium such as N,N'-dimethyl-tetrahydropyridinium, morpholinium such as N,N'-dimethylmorpholinium, piperidinium such as N,N'-diethylpiperidinium, pyridinium such as N-methylpyridinium, N-benzylpyridinium, and N-phenacylpyridinium, imidazolium such as N,N'-dimethylimidazolium, quinolium such as N-methylquinolium, N-benzylquinolium, and N-phenacylquinolium, isoquinolium such as N-methylisoquinolium, thiazonium such as benzylbenzothiazonium and phenacylbenzothiazonium, acridium such as benzylacridium and phenacylacridium, and the like.

Examples of phosphonium cations include tetraarylphosphonium such as tetraphenylphosphonium, tetra-p-tolylphosphonium, tetrakis(2-methoxyphenyl)phosphonium, tetrakis(3-methoxyphenyl)phosphonium, and tetrakis(4-methoxyphenyl)phosphonium, triarylphosphonium such as triphenylbenzylphosphonium, triphenylphenacylphosphonium, triphenylmethylphosphonium, and triphenylbutylphosphonium, tetraalkylphosphonium such as triethylbenzylphosphonium, tributylbenzylphosphonium, tetraethylphosphonium, tetrabutylphosphonium, tetrahexylphosphonium, triethylphenacylphosphonium, and tributylphenacylphosphonium, and the like.

Specific examples of iodonium salt-based photo-acid generators include, but are not limited to:
photo-acid generator, which is an arsenate-type iodonium salt, such as diphenyliodonium hexafluoroarsenate, di(4-chlorophenyl)iodonium hexafluoroarsenate, di(4-bromophenyl)iodonium hexafluoroarsenate, and phenyl(4-methoxyphenyl)iodonium hexafluoroarsenate;
photo-acid generator, which is a phosphate-based iodonium salt, such as 4-methylphenyl-4-(1-methylethyl)phenyl iodonium hexafluorophosphate, 4-methylphenyl-4-(1-methylethyl)phenyl iodonium
   tri(pentafluoroethyl)trifluorophosphate (e.g., IK-1 available from San-Apro Ltd.), 4-methylphenyl-4-(2-methylpropyl)phenyliodonium hexafluorophosphate (e.g., IRGACURE^{®} 250 available from BASF), and bis(C₁₀₋₁₄-alkylphenyl)iodonium hexafluorophosphate (e.g., WPI-113 available from Fujifilm Wako Pure Chemical Corporation);
photo-acid generator, which is an antimonate-type iodonium salt, such as 4-methylphenyl-4-(1-methylethyl)phenyl iodonium hexafluoroantimonate (e.g., WPI-116 available from Fujifilm Wako Pure Chemical Corporation);
iodonium salt-based photo-acid generators such as IK-1FG (available from San-Apro Ltd.);
photo-acid generator, which is a borate-type iodonium salt, such as 4-methylphenyl-4-(1-methylethyl) phenyliodonium tetrakis(pentafluorophenyl)borate, 4-isopropyl-4'-methyl-diphenyliodonium tetrakis(pentafluorophenyl)borate (e.g., BLUESIL^{®} PI 2074 available from ELKEM SILICONES); and the like.

Specific examples of sulfonium salt-based photo-acid generators include, but are not limited to, borate-based sulfonium salt photo-acid generators (e.g., San-Apro Ltd. products: CPI-110B, CPI-310B, CPI-410B, etc., and IGM Resins B.V. products: Omnirad 290, etc.), phosphate sulfonium salt-based photo-acid generators (e.g., San-Apro Ltd. product names: CPI-210S, VC-1S, CPI-410S, etc.), and other sulfonium salt-based photo-acid generators (e.g., San-Apro Ltd. product names: CPI-310FG, VC-1FG, etc.), and the like.

Any one of the photo-acid generators may be used alone, or two or more may be used in combination.

The content of the photo-acid generator in the resin composition is preferably 0.5 to 15 parts by mass and more preferably 1 to 10 parts by mass, relative to 100 parts by mass of cationic polymerizable compounds.

Photo-base generators absorb light to generate a base as an active species, thereby promoting the polymerization of anionic polymerizable compounds. Examples of photo-base generators include, but are not limited to, various compounds that generate bases such as amines, amidines, guanidines, phosphazenes, and carbene. Specific examples of photo-base generators include, but are not limited to, 2-benzyl-2-(dimethylamino)-1-[4-(morpholino)phenyl]-1-butanone, 2-(dimethylamino)-2-(4-methylbenzyl)-1-(4-morpholinophenyl)butan-1-one, 2-nitrobenzyl 4-hydroxypiperidine-1-carboxylate, 4,5-dimethoxy-2-nitrobenzyl 2,6-dimethylpiperidine-1-carboxylate, 1-(9,10-dioxo-9,10-dihydroanthracen-2-yl)ethyl cyclohexyl carbamate, 1-(9,10-dioxo-9,10-dihydroanthracen-2-yl)ethyl 1H-imidazole-1-carboxylate, 3,4,6,7,8,9-hexahydro-2H-pyrimido[1,2-a]pyrimidin-1-ium 2-(3-benzoylphenyl)propanoate, diaminomethaneiminium 2-(3-benzoylphenyl)propanoate, (Z)-N-((bis(dimethylamino)methylene)amino)(isopropylamino)methylene)propane-2-aminium 2-(3-benzoylphenyl)propanoate, 1,2-dicyclohexyl-4,4,5,5-tetramethylbiguanidinium n-butyltriphenylborate, (Z)-{[bis(dimethylamino)methylidene]amino}-N-cyclohexyl(cyclohexylamino)methaniminum tetrakis(3-fluorophenyl)borate, 1,2-diisopropyl-3-[bis(dimethylamino)methylene]guanidinium 2-(3-benzoylphenyl)propionate, 9-anthrylmethyl N,N-diethylcarbamate, (E)-1-piperidino-3-(2-hydroxyphenyl)-2-propen-1-one, 2-nitrophenylmethyl 4-methacryloyloxypiperidine-1-carboxylate, tetramethylguanidinium tetrakis(3-fluorophenyl)borate, tetramethylguanidinium tetrakis(4-fluorophenyl)borate, salts containing protonated DBU and tetrakis(3-fluorophenyl)borate anion, salts containing benzylated DBU and tetrakis(3-fluorophenyl)borate anion, and the like. Any one of them may be used alone, or two or more may be used in combination.

Any one of photo-base generators may be used alone, or two or more may be used in combination.

The content of the photo-base generator in the resin composition is preferably 0.5 to 15 parts by mass and more preferably 1 to 10 parts by mass, relative to 100 parts by mass of the total anionic polymerizable compounds.

The photopolymerization initiator may be any one of a photo-radical polymerization initiator, a photo-acid generator, or a photo-base generator, or any combination thereof.

### (C) Photon upconversion material

The resin composition of the present aspect contains a photon upconversion material (hereinafter also referred to as "component (C)"). Photon upconversion materials generate high-energy states through multiphoton excitation and triplet-triplet annihilation processes when irradiated with specific light. During the relaxation of these states, they emit light having a shorter wavelength than the incident light. By incorporating this photon upconversion material into a resin composition and irradiating the resin composition with long-wavelength light, the photon upconversion material performs wavelength conversion within the resin composition. This enables the photon upconversion material to generate light having a wavelength of 500 nm or less, thereby activating the photopolymerization initiator and curing the resin composition. In this aspect, the emission wavelength of the (C) photon upconversion material preferably includes wavelengths of 500 nm or less, more preferably includes wavelengths of 450 nm or less, further preferably includes wavelengths of 430 nm or less, and particularly preferably includes wavelengths of 400 nm or less. In one embodiment, the emission wavelength of component (C) includes ultraviolet light wavelengths (200 nm to 380 nm).

Photon upconversion (UC) is a technology that converts low-energy (long-wavelength) light into high-energy (short-wavelength) light. Mechanisms for photon upconversion include triplet-triplet annihilation (TTA), multiphoton excitation of rare-earth-containing materials, and two-photon absorption, and the like. In the present aspect, any photon upconversion material based on any photon upconversion mechanism may be used; and the (C) photon upconversion material is preferably (C1) a triplet-triplet annihilation type photon upconversion material, (C2) a multiphoton excitation type photon upconversion material, or a combination thereof.

### (C1) Triplet-triplet annihilation type photon upconversion material

In one embodiment, the photon upconversion material is a triplet-triplet annihilation type photon upconversion material (hereinafter also referred to as "component (C1)"). In triplet-triplet annihilation type photon upconversion materials, a donor-acceptor pair is employed. For triplet-triplet annihilation type photon upconversion materials, those described in, for example, JP 2021-080335 A and JP 2020-056030 A may be used.

### <Acceptor>

An acceptor (acceptor compound) is any compound (luminescent material) capable of undergoing photon upconversion luminescence after receiving triplet energy transfer from a donor and entering an excited singlet state, and there are no particular restrictions. Examples of acceptors include, but are not limited to, compounds containing naphthalene structures, anthracene structures, tetracene structures, pyrene structures, perylene structures, biphenyl structures, terphenyl structures, perylene diimide structures, naphthalene diimide structures, BODIPY (boron dipyromethene; 4,4-difluoro-4-bora-3a,4a-diaza-s-indacene) structure. Specific examples of acceptors include, but are not limited to, 9,10-diphenylanthracene (DPA), tetra-tert-butylperylene, anthracene (An), 2,5-diphenyl oxazole (PPO), rubrene, 2-chloro-bis-phenyl-ethynyl anthracene (2CBPEA), 9,10-bis(phenylethynyl)anthracene (BPEA), 9,10-bis(phenylethynyl)naphthacene (BPEN), perylene, Coumarin 343 (C343), 9,10-dimethylanthracene (DMA), pyrene, tert-butylpyrene, and boron dipyromethene (BODIPY) derivatives BD-1 and BD-2 bearing an iodophenyl group, as well as halogenated derivatives of these compounds. Other specific examples of acceptors include those described in JP 2021-080335 A and JP 2020-056030 A.

### <Donor>

The donor (donor compound) is any compound which may absorb incident light, transition to an excited triplet state via intersystem crossing from the excited singlet state, and simultaneously induce triplet-triplet energy transfer to an acceptor, and it is not specifically restricted. Examples of donors include, but are not limited to, compounds containing metal atoms such as Pt, Pd, Zn, Ru, Re, Ir, Os, Cu, Ni, Co, Cd, Au, Ag, Sn, Sb, Pb, P, and As, as well as organic moieties such as porphyrin structures, phthalocyanine structures, fullerene structures, and 2-phenylpyridinato structures. Specific examples of donors include, but are not limited to, palladium octabutoxyphthalocyanine (PdOBuPC), platinum tetraphenyl tetranaphthoporphyrin (PtTPTNP), palladium(II)-meso-tetraphenyl-tetrabenzoporphyrin (PdTPBP), [Ru(dmb)₃]²⁺ (dmb is 4,4'-dimethyl-2,2'-bipyridine), palladium(II) tetraanthraporphyrin (PdTAP), platinum(II) tetraphenyl tetrabenzoporphyrin (PtTPBP), palladium meso-tetraphenyltetrabenzoporphyrin (PdPh4TBP), palladium octaethylporphyrin (PdOEP), 11,15,18,22,25-octabutoxyphthalocyanine (PdPc(OBu)₈), octaethylporphyrin (OEP), platinum octaethylporphyrin (PtOEP), zinc(II) octaethylporphyrin (ZnOEP), zinc(II) meso-tetraphenylporphyrin (ZnTPP), palladium(II) tetraphenyl tetrabenzoporphyrin (PdTPBP), palladium(II) meso-tetraphenyl-octamethoxydetetranaphthol porphyrin (PdPh₄OMe₈TNP), 2-methoxythioxanthone (2MeOTX), and Ir(ppy)₃ (ppy = 2-phenylpyridine). Other specific examples of donors include those described in JP. 2021-080335 A and JP 2020-056030 A.

By appropriately selecting combinations of donors and acceptors, the wavelengths of incident light and emitted light can be controlled. The combination of donors and acceptors may consist of one pair or two or more pairs. For example, in one embodiment, by selecting multiple combinations of donors and acceptors, energy transfer from one photon upconversion material to another photon upconversion material within the resin composition becomes possible. Through this stepwise energy transfer, the emission wavelength of the photon upconversion material can be adjusted to ultimately include wavelengths of 500 nm or less from the desired incident light. This enables the photopolymerization of the resin composition using the desired incident light. The molar ratio of donor to acceptor can be, for example, donor:acceptor = 1:1 to 1:100,000. By appropriately selecting the donor-acceptor combination and molar ratio, the emission wavelength of the (C1) triplet-triplet annihilation type photon upconversion material, which emits light upon irradiation with light exceeding 500 nm, can be adjusted to include wavelengths of 500 nm or less.

For such (C1) triplet-triplet annihilation type photon upconversion materials, the wavelength range of the excitation light for inducing upconversion luminescence is preferably wavelengths exceeding 500 nm, for example, wavelengths within the range exceeding 500 nm and not exceeding 2000 nm. The wavelength of the upconversion emission from component (C1) preferably includes wavelengths of 500 nm or less, more preferably includes wavelengths of 450 nm or less, further preferably includes wavelengths of 430 nm or less, and particularly preferably includes wavelengths of 400 nm or less. In one embodiment, the emission wavelength of component (C1) includes ultraviolet light wavelengths (200 nm to 380 nm).

Any one of donors may be used alone, or two or more may be used in combination. Any one of acceptors may be used alone, or two or more may be used in combination.

In the present aspect, the content of component (C1) in the resin composition is preferably 0.001 to 10 parts by mass, more preferably 0.005 to 10 parts by mass, and further preferably 0.01 to 10 parts by mass, relative to 100 parts by mass of the total resin composition, from the perspective of the curability of the resin composition. The amount of component (C1) is preferably 0.001 to 20 parts by mass, more preferably 0.005 to 15 parts by mass, and further preferably 0.01 to 10 parts by mass, relative to the total of 100 parts by mass of components (A), (B), and (C). In one embodiment, the amount of component (C1) is 0.001 to 1 part by mass relative to the total of 100 parts by mass of components (A), (B), and (C). In one embodiment, the amount of component (C1) is preferably 1 mmol/L to 6 mol/L, more preferably 2 mmol/L to 5 mol/L, further preferably 6 mmol/L to 4 mol/L, particularly preferably 10 mmol/L to 3 mol/L, and most preferably 50 mmol/L to 2 mol/L.

### (C2) Multiphoton excitation type photon upconversion material

In one embodiment, the photon upconversion material is a multiphoton excitation type photon upconversion material (hereinafter also referred to as "component (C2)"). Multiphoton excitation type photon upconversion materials are materials that emit upconverted light through multiphoton excitation. The wavelength of the upconversion emission from the component (C2) preferably includes wavelengths of 500 nm or less, more preferably includes wavelengths of 450 nm or less, further preferably includes wavelengths of 430 nm or less, and particularly preferably includes wavelengths of 400 nm or less. In one embodiment, the emission wavelength of component (C2) includes ultraviolet light wavelengths (200 nm to 380 nm). Component (C2) may have emission peaks in the red region and green region in addition to the UV-A region or the violet or blue region. In this description, the red region refers to the light wavelength region of 600 to 800 nm, the green region refers to the light wavelength region of 500 to 600 nm, and the blue region refers to the light wavelength region of 400 to 500 nm. In this embodiment, it is preferable that component (C2) exhibits luminescence intensity in the region of wavelengths of 500 nm or less.

Component (C2) exhibits upconversion luminescence properties due to the doping of rare earth elements into an optically inert host material. By appropriately selecting the type and amount of rare earth elements contained in component (C2), upconversion luminescence at any desired wavelength can be achieved.

As for rare earth elements, there is no particular limitation as long as they are rare earth elements capable of upconversion luminescence; and, in general, rare earth elements that form trivalent ions can be cited. Among these, it is preferable to use a combination of at least two or more rare earth elements selected from the group consisting of erbium (Er), holmium (Ho), praseodymium (Pr), thulium (Tm), neodymium (Nd), gadolinium (Gd), europium (Eu), ytterbium (Yb), Samarium (Sm), and Cerium (Ce).

Examples of combinations of the aforementioned rare earth elements include: a combination of ytterbium (Yb), erbium (Er), and thulium (Tm); a combination of praseodymium (Pr), erbium (Er), and thulium (Tm); a combination of erbium (Er) and thulium (Tm); and others. Among these, the combination of ytterbium (Yb), erbium (Er), and thulium (Tm), as well as the combination of ytterbium (Yb) and thulium (Tm), are preferred.

In particular, examples of rare earth element combinations exhibiting strong upconversion emission in the blue wavelength region include Yb³⁺/Tm³⁺.

For the wavelength range of excitation light to induce upconversion luminescence in such a component (C2), wavelengths exceeding 500 nm, for example, wavelengths within the range exceeding 500 nm and not exceeding 2000 nm, are preferred.

The host material (base material) is one that supports rare earth elements, and is not particularly limited as long as it supports said rare earth elements in a state capable of upconversion luminescence. It may be an organic substance that reacts with rare earth elements to form complexes, dendrimers, etc., or it may be an inorganic substance. It is preferable that the material be inorganic substance, as this facilitates incorporating the aforementioned rare earth elements in a state capable of luminescence.

For such inorganic host materials, materials exhibiting transparency to excitation light are preferred from the standpoint of luminescence efficiency. Specifically, halides such as fluorides and chlorides, oxides, sulfides, and oxysulfides are particularly suitable for use. Examples of such halides include, but are not limited to, barium chloride (BaCl₂), lead chloride (PbCl₂), lead fluoride (PbF₂), cadmium fluoride (CdF₂), lanthanum fluoride (LaF₃), yttrium fluoride (YF₃), and the like. Examples of oxides include, but are not limited to, yttrium oxide (Y₂O₃), cerium oxide (CeO₂), aluminum oxide (Al₂O₃), silicon dioxide (SiO₂), tantalum oxide (Ta₂O₅), and the like. Here, a coating material may be formed around the component (C2) based on a halide. Such coating materials may utilize oxides as described above.

Additionally, core-shell type upconversion materials composed of a core (NaYREF₄)/shell (NaYF₄) (where RE = rare earth element) can also be used.

Component (C2) can be produced by known methods, such as gas phase evaporation methods including high-frequency plasma methods, sputtering methods, glass crystallization methods, chemical precipitation methods, reverse micelle methods, sol-gel methods and similar methods, precipitation methods including hydrothermal synthesis and coprecipitation methods, or spray methods. The production method for component (C2) may be referred to, for example, in the method described in JP 2006-117864 A.

Component (C2) may be one commercially available. For example, Hefei Fluonano Biotech offers commercially available core-shell upconversion phosphor nanoparticles with excitation at 975 nm and emission at 365 nm under product code 201-30-365.

Any one of component (C2) may be used alone, or two or more may be used in combination. For example, in one embodiment, by using two or more types of component (C2) together, energy transfer from one photon upconversion material to another photon upconversion material becomes possible within the resin composition. Through this stepwise energy transfer, the emission wavelength of the photon upconversion material can be adjusted to ultimately include wavelengths of 500 nm or less from the desired incident light. This enables the photopolymerization of the resin composition using the desired incident light.

The content of component (C2) in the resin composition is, from the perspective of light conversion efficiency and light curability, for example 0.1 to 60 parts by mass, preferably 0.1 to 50 parts by mass, more preferably 0.1 to 40 parts by mass, and more preferably 1 to 30 parts by mass, relative to 100 parts by mass of the total resin composition.

In this embodiment, either (C1) a triplet-triplet annihilation type photon upconversion material or (C2) a multiphoton excitation type upconversion material may be used alone, or these may be used in any combination. For example, in one embodiment, combining component (C1) and component (C2) enables energy transfer within the resin composition from component (C1) to component (C2) or from component (C2) to component (C1). Through this stepwise energy transfer, the emission wavelength of the photon upconversion material can be adjusted to ultimately include wavelengths of 500 nm or less from the desired incident light. This enables the photopolymerization of the resin composition using the desired incident light.

The resin composition of the present aspect may optionally contain any additional components other than components (A) to (C), such as those described below, as desired.

### - Filler

The resin composition of this aspect may contain a filler to the extent that the effect of the present aspect is not impaired. Inclusion of the filler in the resin composition lowers the linear expansion coefficient of the cured product obtained by curing the resin composition, thereby improving thermal cycle resistance. In addition, a filler with a low modulus of elasticity can relieve stresses in the cured product, improving long-term reliability. The filler is broadly classified into inorganic and organic fillers.

The inorganic filler is not particularly limited as long as it consists of a granular material formed by an inorganic material and has the effect of lowering the coefficient of linear expansion when added. Silica, talc, alumina, aluminum nitride, calcium carbonate, aluminum silicate, magnesium silicate, magnesium carbonate, barium sulfate, barium carbonate, lime sulfate, aluminum hydroxide, calcium silicate, potassium titanate, titanium oxide, zinc oxide, silicon carbide, silicon nitride, boron nitride, and the like can be used as the inorganic material. Any one of the inorganic fillers may be used alone, or two or more may be used in combination. Silica filler is preferred as the inorganic filler because of its high filling capacity. Amorphous silica is preferred for silica.

The inorganic filler may be surface treated with a coupling agent such as a silane coupling agent. This allows the thixotropic index (TI) of the resin composition to be maintained within an appropriate range.

Examples of organic fillers include polytetrafluoroethylene (PTFE) filler, silicone filler, acrylic filler, styrene filler, and the like. Organic fillers may be surface treated.

The shape of the filler is not particularly limited and can be any of spherical, phosphor, needle, irregularly shaped, and the like.

The average particle size of the filler is preferably 0.01 to 15 µm, and more preferably 0.01 to 10 µm. From the perspective of transmittance of long-wavelength light irradiated onto the resin composition, the maximum particle size of the filler is preferably 50 µm or less, and more preferably 30 µm or less.

In this description, the average particle size is the particle diameter at the 50% cumulative value in the volume-based particle size distribution measured by laser diffraction/scattering. The maximum particle size is the largest particle diameter in the volume-based particle size distribution measured by laser diffraction/scattering.

When containing a filler, the filler content is preferably 0.5 to 80 % by mass and more preferably 1 to 70 % by mass relative to the total mass of the resin composition.

### - Thixotropic agent

The resin composition of the present aspect may contain a thixotropic agent to the extent that the effect of the present aspect is not impaired.

Thixotropic agents include silica such as colloidal silica, hydrophobic silica, fine silica, and nano-silica; bentonite; acetylene black; and Ketjenblack. Nano-silica is preferred from the perspective of shape retention after application. From the perspective of preventing resin composition interlocking during bonding and moisture resistance adhesion, nano silica with an average particle size of 10 to 750 nm is more preferable as a thixotropic agent, and nano silica with an average particle size of 20 to 600 nm is even more preferable. Commercially available products of the thixotropic agent include, but are not limited to, hydrophobic fumed silica from Cabot Corporation (trade name: CAB-O-SIL^{®} TS720, average particle size: 12 nm), hydrophobic fumed silica from NIPPON AEROSIL CO., LTD. (trade name: R805, average particle size: 20 nm), and amorphous silica from NIPPON SHOKUBAI CO., LTD. (trade name: Sea Host KE-P10, average particle size: 100 nm), and the like. Here, the average particle size of the nano-silica particles is measured using a dynamic light scattering-type NanoTrack particle size analyzer. Any one of the thixotropic agents may be used alone, or two or more may be used in combination.

When containing a thixotropic agent, the thixotropic agent content is preferably 0.01 to 30 % by mass, more preferably 0.05 to 25 % by mass, and most preferably 0.1 to 20 % by mass, relative to the total mass of the resin composition.

### - Light-shielding agent

The resin composition of the present aspect may contain a light-shielding agent to the extent that it does not impair the effects of the present aspect.

Depending on the application of the cured resin composition, light-shielding properties may be required. In such cases, the resin composition of the present aspect may contain a light-shielding agent. Long-wavelength light can pass through light-shielding agents that block ultraviolet rays. The resin composition of the present aspect can be cured by irradiation with long-wavelength light without being affected by the light-shielding agent or with minimal effect. Examples of light-shielding agents include, but are not limited to, carbon black and titanium black. Furthermore, these light-shielding agents can also be used as photothermal conversion materials that convert long-wavelength light into heat.

### - Other additives

The resin composition of this aspect may, if desired, further contain other additives, such as a photosensitizer, a conductive filler, a stabilizer, a radical polymerization inhibitor, an anionic polymerization inhibitor, a coupling agent, an ion trap agent, a leveling agent, an antioxidant, a defoaming agent, a viscosity adjuster, a flame retardant, a colorant, a plasticizer, a solvent, and the like, to the extent that the purpose of this aspect is not compromised. The type and amount of each additive is as usual.

The viscosity of the resin composition of the present aspect is preferably 0.1 to 100 Pa·s. The viscosity can be adjusted as appropriate depending on the application and location of use of the resin composition. This resin composition excels in application to complex geometries where UV light irradiation is difficult and to confined areas. In this description, unless otherwise specified, viscosity is expressed as the value measured in accordance with Japanese Industrial Standard JIS K6833. Specifically, it can be determined by measuring at a rotation speed of 10 rpm using an E-type viscometer. There are no particular restrictions on the equipment, rotor, or measurement range used.

The light-curable resin composition of the present aspect may be configured as a one-component resin composition contained in a single container, or as a two-component (or multi-component) resin composition divided into two or more containers, depending on its application and other factors. A two-component (or multi-component) resin composition becomes a light-curable resin composition in its usable form when the two (or multiple) components are mixed during use. When using a two-component (or multi-component) resin composition, components (A) to (C) and any other optional components as needed may be selected individually in the same manner as for a one-component system. When using a two-component (or multi-component) resin composition, the aforementioned component (A) and component (B), or components (A) to (C), and any other optional components as needed, may be divided into two or more components in any manner without particular restriction. When dividing into two or more liquids by any arbitrary method, one or more components selected from components (A) to (C) and any other optional components as needed may be included in each liquid respectively. Alternatively, components (A) to (C) and any other optional components as needed may be included in a single liquid. Furthermore, a liquid consisting solely of components (A) to (C) and/or any other optional components as needed may also be present. For example, when dividing into Liquid A and Liquid B, the division may be Liquid A: component (A), Liquid B: component (B) and component (C); Liquid A: component (A) and component (B), Liquid B: component (C); or Liquid A: component (A) and component (C), Liquid B: component (B). When components (A) to (C) are contained in Liquid A, Liquid B may contain one or more types selected from components (A) to (C). Additionally, components other than components (A) to (C) may be included in either or both of Liquid A and Liquid B in the above combination. When components (A) to (C) are contained in Liquid A and all other components are contained in Liquid B, either Liquid A alone or Liquid A combined with Liquid B may be considered the resin composition of this aspect. On the other hand, when components (A) to (C) are contained in separate liquids, combining these liquids can be considered to form the resin composition of this aspect. Examples where components (A) to (C) are contained in separate liquids include, for instance, resin compositions configured with components (A) to (C) divided into two or more containers, specifically kits composed of multiple liquids each containing one of components (A) to (C).

The method of producing the resin composition of this aspect is not particularly limited. For example, components (A) to (C), and other optional components as needed, can be introduced simultaneously or separately into an appropriate mixing machine, stirred and blended to form a homogeneous composition, thereby obtaining the resin composition of this aspect. The mixing machine is not particularly limited, and can be a ricer, Henschel mixer, 3-roll mill, ball mill, planetary mixer, beads mill, and the like, equipped with an agitator and heating device. A combination of these devices may also be used as appropriate.

The resin composition obtained in this manner is cured by irradiation with long-wavelength light (e.g., exceeding 500 nm), and heat post-curing is not required.

For the photopolymerization of conventional UV-curable adhesives, high-energy, short-wavelength light (e.g., 365 nm UV light) is typically used. Therefore, when fillers or similar substances are included in the adhesive, short-wavelength light irradiation results in a short penetration distance for the light into the UV-curable adhesive. Furthermore, in areas where light cannot reach due to obstructions or similar factors, curing does not proceed. Regarding the latter point specifically, for example, when examining the relationship between the wavelength of irradiation light and the penetration depth into a silicon substrate used as a barrier material, ultraviolet light below 380 nm penetrates only a few to tens of nanometers into the silicon substrate. In contrast, visible light between 380 and 780 nm penetrates several hundred nanometers to several micrometers, while infrared light above 780 nm reaches penetration depths ranging from tens of micrometers to the millimeter order (For example, see Optical Properties of Silicon, [online], PVEducation, <https://www.pveducation.org/pvcdrom/materials/optical-properties-of-silicon>). The penetration depth of ultraviolet light during irradiation of resin compositions is greater than that of silicon substrates. However, increasing the wavelength of the irradiation can be considered a useful method for enhancing the cure degree of resin compositions.

The resin composition of this aspect can be used, for example, as an adhesive, sealant or coating agent for fixing, bonding, or protecting components that constitute semiconductor devices or electronic components, or as a raw material thereof. In one embodiment, the light-curable resin composition of the present aspect can be used for curing by irradiation with light having a wavelength exceeding 500 nm. In one embodiment, the light-curable resin composition of the present aspect can be used as an adhesive, sealant, or coating agent for semiconductor devices or electronic components.

### [Bonding Method]

Furthermore, one aspect of the present invention is a method for bonding at least two parts using a light-curable resin composition, wherein the bonding method comprises:
a step of applying the light-curable resin composition of the above aspect to at least one of the at least two parts; and
a step of irradiating the at least one of the at least two parts, the light-curable resin composition, or both thereof with light having a wavelength exceeding 500 nm.

The first step is applying the light-curable resin composition of the aforementioned aspect to at least one of at least two parts.

The parts are preferably parts constituting semiconductor devices or electronic components, such as semiconductor devices, substrates, etc., but are not limited to these. The material of the part may be any of engineering plastics (e.g., LCP (liquid crystal polymer), polyamide, polycarbonate, etc.), ceramics, or metals (e.g., copper, nickel).

The method for applying the resin composition is not particularly limited; for example, it can be applied to the desired portion of a substrate or other part using known printing methods, dispensing methods, or coating methods. Printing methods include, but are not limited to, inkjet printing, screen printing, lithography, carton printing, metal printing, offset printing, gravure printing, flexography, and others. Dispensing methods include, but are not limited to, jet dispensers, air dispensers, and others. Coating methods include, but are not limited to, dip coating, spray coating, bar coater coating, gravure coating, reverse gravure coating, spin coater coating, and others.

Next step is either attaching one part to the other part via the light-curable resin composition applied to the part, or attaching the part with the light-curable resin composition applied to it to the other part via this light-curable resin composition. The attachment method may be any known method. If necessary, pressure may be applied while pressing after attachment.

Next step is irradiating the at least one of the at least two parts, the light-curable resin composition, or both thereof with light having a wavelength exceeding 500 nm, for example light having the range of wavelengths exceeding 500 nm and not exceeding 2000 nm. This enables the photon upconversion material within the resin composition to perform wavelength conversion, generating light having a wavelength of 500 nm or less, preferably 450 nm or less, more preferably 430 nm or less, and particularly preferably 400 nm or less. This light activates the photopolymerization initiator, curing the polymerizable compound to bond at least two parts together. The wavelength of the irradiation light may be, for example, 532 nm, 980 nm, 1064 nm, or 1550 nm, but is not limited to these wavelengths. The light source may be an LED, laser, LD module, or other coherent light source. The accumulated dose of the irradiation light can range from 1 mJ/cm² to 2000 J/cm². The irradiation intensity can range from 1 mW/cm² to 1000 W/cm². The accumulated dose and irradiation intensity of irradiation light can be adjusted as appropriate according to the desired degree of curing. In this aspect, either spot irradiation, which irradiates light to a localized area, or area irradiation, which irradiates light to a wide area, can be performed. The resin composition used in this aspect can cure even in shaded areas of the parts. Therefore, the bonding method of this aspect allows light irradiation not only directly onto the resin composition but also through the parts.

### [Sealing Method]

Furthermore, another aspect of the present invention is a method for sealing gap(s) between parts or within part(s) using a light-curable resin composition, wherein the sealing method comprises:
a step of applying or injecting the light-curable resin composition of the above aspect into the gap(s) between the parts or within the part(s); and
a step of irradiating the light-curable resin composition with light having a wavelength exceeding 500 nm.

The parts and light irradiation are the same as those in the aforementioned bonding method.

As application or injection methods, in addition to the applying method in the aforementioned bonding method, potting methods are included, but are not limited to these.

The resin composition used in this aspect achieves a high curing depth, enabling the curing of resin composition located deep within gaps where UV light has difficulty penetrating. This allows for effective sealing using the sealing method of this aspect.

### [Coating Method]

Furthermore, another aspect of the present invention is a method for coating surface of an object with a curable composition, wherein the method comprises:
a step of applying the light-curable resin composition of the aforementioned aspect to the object; and
a step of irradiating the light-curable resin composition with light having a wavelength exceeding 500 nm.

The object may be a semiconductor device or electronic component, or a part constituting such a device or component. Semiconductor devices or electronic components include, but are not limited to, for example, HDDs, semiconductor elements, sensor modules such as image sensor modules, other semiconductor modules, and integrated circuits. Parts constituting semiconductor devices or electronic components include, but are not limited to, for example, semiconductor elements and substrates. The material of the part may be any of engineering plastics (e.g., LCP (liquid crystal polymer), polyamide, polycarbonate, etc.), ceramics, or metals (e.g., copper, nickel).

The application method is the same as that used in the aforementioned bonding method.

The light irradiation method is the same as that used in the aforementioned bonding method.

### [Adhesive, sealant, or coating agent]

The adhesive, sealant, or coating agent, which is another aspect of the present invention, comprises the resin composition of the aforementioned aspect. This adhesive, sealant, or coating agent enables good fixation, bonding, or protection for engineering plastics (e.g., LCP (liquid crystal polymer), polyamide, polycarbonate, etc.), ceramics, and metals (e.g., copper, nickel, etc.), and can be used to fix, bond, or protect semiconductor devices or electronic components, or the parts constituting them. Semiconductor devices or electronic components include, but are not limited to, for example, HDDs, semiconductor elements, sensor modules such as image sensor modules, other semiconductor modules, and integrated circuits.

The adhesive, sealant, or coating agent of the present aspect can be fully cured by irradiation with long-wavelength light (e.g., exceeding 500 nm), thereby offering high productivity and being suitable for use in manufacturing semiconductor devices and electronic components, for example.

### [Cured product of resin composition or adhesive, sealant, or coating agent]

The cured product, which is another aspect of the present invention, is a cured product in which the resin composition or adhesive, sealant, or coating agent described in the aforementioned aspect has been cured.

### [Semiconductor device and electronic component]

The semiconductor device or electronic component, which is another aspect of the present invention, has high reliability, because it contains the cured product of the aspect described above. The term "semiconductor device" refers to all devices that can function by utilizing semiconductor characteristics and includes electronic components, semiconductor circuits, modules incorporating these components, and electronic equipment. Examples of the semiconductor device or electronic component include, but are not limited to, HDDs, semiconductor elements, sensor modules such as image sensor modules, other semiconductor modules, integrated circuits, and the like.

### [Curing method, method for producing cured product]

Another aspect of the present invention is a method for producing a cured product, which comprises irradiating the light-curable resin composition of the aforementioned aspect, or the adhesive, sealant, or coating agent of the aforementioned aspect, with light having a wavelength exceeding 500 nm. A further aspect of the present invention is a method for curing a light-curable resin composition, which comprises irradiating the light-curable resin composition of the aforementioned aspect with light having a wavelength exceeding 500 nm. By irradiating light having a wavelength exceeding 500 nm, for example light having the range of wavelengths exceeding 500 nm and not exceeding 2000 nm, the photon upconversion material within the resin composition performs wavelength conversion, generating light having a wavelength not exceeding 500 nm, preferably light having a wavelength of 450 nm or less, more preferably light having a wavelength of 430 nm or less, and particularly preferably light having a wavelength of 400 nm or less, thereby activating the photopolymerization initiator and curing the polymerizable compound. The details of light irradiation with wavelengths exceeding 500 nm in these methods are identical to those in the aforementioned bonding method, sealing method, and coating method. In this aspect, either spot irradiation, which irradiates light to a localized area, or area irradiation, which irradiates light to a wide area, can be performed.

### Examples

Hereinbelow, the present invention will be described in more detail with reference to the following Examples and Comparative Examples, which should not be construed as limiting the scope of the present invention. In the following examples, parts and percentages refer to parts by mass and percentages by mass, unless otherwise noted.

### [Experimental Example 1]

The resin compositions of Examples 1 to 18 and Comparative Examples 1 to 6 were prepared by mixing predetermined amounts of each component according to the formulations shown in Table 1. Triplet-triplet annihilation photon upconversion material (C1) was mixed with a polymerizable compound and a photopolymerization initiator to obtain a resin composition. When containing multiphoton excitation type photon upconversion material (C2), component (C2) was mixed into the aforementioned resin composition in a predetermined amount. In Table 1, the amount of each component is expressed in mass %. The components used in the examples and comparative examples are as follows.

### - (A) Polymerizable compound

(A-1): Dimethylol-tricyclodecane diacrylate (trade name: Light Acrylate DCP-A, available from Kyoeisha Chemical Co., Ltd.)
(A-2): Bisphenol A type/Bisphenol F type mixed epoxy resin (trade name: EPICLON 835LV, available from DIC Corporation)
(A-3): Alicyclic epoxy resin (trade name: CELLOXIDE^{®} 2021P, available from Daicel Corporation)
(A-4): Hydrogenated bisphenol A epoxy resin (trade name: jER YX8000 available from Mitsubishi Chemical Corporation)

### - (B) Photopolymerization initiator

(B-1): 2-Dimethylamino-2-(4-methylbenzyl)-1-(4-morpholin-4-ylphenyl)butan-1-one (trade name: Omnirad 379EG, available from IGM Resins B.V.)
(B-2): 1-Hydroxycyclohexylphenylketone (trade name: Omnirad 184, available from IGM Resins B.V.)
(B-3): 2,4,6-Trimethylbenzoyldiphenylphosphine oxide (trade name: Omnirad TPO, available from IGM Resins B.V.)
(B-4): Iodonium salt-based photo-cathonic initiator (trade name: BLUESIL^{®} PI 2074, available from ELKEM SILICONES)
(B-5) Sulfonium, tris[4-[(4-acetylphenyl)thio]phenyl]-, tetrakis(2,3,4,5,6-pentafluorophenyl)borate (trade Name: Omnirad 290, available from IGM Resins B.V.)

### - (C) Photon Upconversion Material

### (C1) Triplet-triplet annihilation photon upconversion material

(C1-1D): Platinum(II) octaethylporphyrin (PtOEP) as a donor (available from Sigma-Aldrich Japan)
(C1-1A): Diphenylanthracene (DPA) as an acceptor (available from Tokyo Chemical Industry Co., Ltd.)

The PtOEP:DPA mass ratio for the donor and acceptor was set to 1:8 (molar ratio 1:17), yielding the photon upconversion material (C1-1).

### (C2) Multiphoton excitation type photon upconversion material

### (C2-1): CeO₂/3.0Er³⁺, 0.6Yb³⁺ (Synthesis method shown below)

CeO₂ (Fujifilm Wako Pure Chemical, reagent grade), Er₂O₃ (Fujifilm Wako Pure Chemical, ≥99.0%) and Yb₂O₃ (Fujifilm Wako Pure Chemical, 98.0% purity or higher) were weighed so that Er³⁺ and Yb³⁺ could be doped into CeO₂ at concentrations of 3.0 mol% and 0.6 mol%, respectively. Then, they were ground together in a mortar. This powder was pre-fired at 1200°C (heating rate: 600°C/h, firing time: 2 hours), re-ground in a mortar, and then fired at 1500°C (heating rate: 600°C/h, firing time: 4 hours) to obtain CeO₂/3.0Er³⁺, 0.6Yb³⁺. The absence of unreacted material was confirmed by XRD.

### (C2-2): Y₂O₃/2.0Er³⁺, 2.0Yb³⁺ (Synthesis method shown below)

Y₂O₃ (Fujifilm Wako Pure Chemical, reagent grade), Er₂O₃ (Fujifilm Wako Pure Chemical, 99.0% purity or higher) and Yb₂O₃ (Fujifilm Wako Pure Chemical, 98.0% purity or higher) were weighed so that Er³⁺ and Yb³⁺ could be doped into Y₂O₃ at concentration of 2.0 mol% each. Then, they were ground together in a mortar. This powder was pre-fired at 1400°C (heating rate: 600°C/h, firing time: 2 hours), re-ground in a mortar, and then fired at 1600°C (heating rate: 600°C/h, firing time: 4 hours) to obtain Y₂O₃/2.0Er³⁺, 2.0Yb³⁺. The absence of unreacted material was confirmed by XRD.

### -- (D) Filler

(D-1): High-purity synthetic spherical silica (trade name: SE-2300, available from Admatechs Company Limited, volume-average particle size: 0.6 µm)

### - (E) Thixotropic agent

(E-1): Hydrophobic fumed silica (trade name: CAB-O-SIL^{®} TS720, available from CABOT Corporation, average particle size: 12 nm)

### - (F) Light-shielding agent

(F-1): Carbon black (trade name: Special Black 4, available from Orion Engineered Carbons Co., Ltd.)
(F-2): Titanium black (trade name: Titanium Black 13M, available from Mitsubishi Materials Corporation)

In the examples and comparative examples, the properties of the resin composition were measured as follows.

### [Evaluation of Curing Properties of Resin Compositions]

At a temperature of 22°C ± 5°C and humidity of 50% ± 10% in a dark environment, a single drop (approximately 0.02 g) of the light-curable resin composition was placed onto a glass slide. A second glass slide was placed on top to create a test specimen, which was then irradiated with ultraviolet light, visible light, and infrared light, respectively.

The ultraviolet irradiation conditions are as follows: Using a single-wavelength UV LED light source (OmniCure^{®} AC475, available from Exelitas Technologies), irradiation with ultraviolet light at a wavelength of 365 nm was continuously carried out at an irradiation intensity of 500 mW/cm² from a height of 4 cm above the surface of the glass slide toward the light source, until the accumulated dose reached 2000 mJ/cm² (measured using the UIT-250 ultraviolet cumulative light meter, receiver UVD-S365 (available from Ushio Inc.)).

The visible light irradiation conditions were as follows: Using a semiconductor-excited solid-state laser (Class 3R green laser pointer LP-GL1016BK, available from SANWA SUPPLY INC.), irradiation with visible light having a wavelength of 532 nm was continuously carried out at an irradiation intensity of 1 mW/cm² from a position 4 cm above the surface of the glass slide toward the light source, until the accumulated dose reached 720 mJ/cm².

The infrared irradiation conditions are as follows: Using an infrared semiconductor laser (Lab Laser System, available from Civilaser), irradiation with infrared light at a wavelength of 980 nm was continuously carried out at an irradiation intensity of 200 mW/cm² from a position 4 cm above the surface of the glass slide toward the light source, until the accumulated dose reached 720 kJ/cm².

In this test, one slide glass was peeled off the test specimen. Light-curing properties were evaluated based on appearance and touch with a bamboo skewer, using a three-level scale: cured (○), partially uncured (Δ), and uncured (x). The results are shown in Tables 1-1, 1-2, and 1-3.

### [Table 1-1]

**Table 1-1**

| | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| (A) Polymerizable compound | (A-1) | | 71.5 | 61.7 | 66.6 | 84.8 | 92.7 | 96.2 | 97.7 | 98.0 | 98.0 | 60.8 |
| | (A-2) | | | | | | | | | | | |
| | (A-3) | | | | | | | | | | | |
| | (A-4) | | | | | | | | | | | |
| (B) Photopolymerization initiator | (B-1) | | 1.5 | 1.3 | 1.4 | 1.7 | 1.9 | 2.0 | 2.0 | 2.0 | 2.0 | 1.3 |
| | (B-2) | | | | | | | | | | | |
| | (B-3) | | | | | | | | | | | |
| | (B-4) | | | | | | | | | | | |
| | (B-5) | | | | | | | | | | | |
| (C) Upconversion material | (C1) | (C1-1D) | 3.0 | 3.0 | 3.0 | 1.5 | 0.6 | 0.2 | 0.03 | 0.003 | 0.0003 | 0.6 |
| | | (C1-1A) | 24.0 | 24.0 | 24.0 | 12.0 | 4.8 | 1.6 | 0.24 | 0.024 | 0.0024 | 4.8 |
| | (C2) | (C2-1) | | | | | | | | | | |
| | | (C2-2) | | | | | | | | | | |
| (D) Filler | (D-1) | | | 10.0 | | | | | | | | 32.5 |
| (E) Thixotropic agent | (E-1) | | | | 5.0 | | | | | | | |
| (F) Light-shielding agent | (F-1) | | | | | | | | | | | |
| | (F-2) | | | | | | | | | | | |
| Curing Test Results | UV light (365 nm) | | ○ | ○ | ○ | ○ | ○ | ○ | ○ | ○ | ○ | ○ |
| | Visible light (532 nm) | | ○ | ○ | ○ | ○ | ○ | ○ | ○ | ○ | △ | ○ |
| | Infrared light (980 nm) | | - | - | - | - | - | - | - | - | - | - |

**Table 1-2**

| | | | Ex. 11 | Ex. 12 | Ex. 13 | Ex. 14 | Ex. 15 | Ex. 16 | Ex. 17 | Ex. 18 |
|---|---|---|---|---|---|---|---|---|---|---|
| (A) Polymerizable compound | (A-1) | | 97.7 | 97.7 | 97.7 | 97.6 | 48.2 | 48.2 | | |
| | (A-2) | | | | | | | | 98.7 | |
| | (A-3) | | | | | | | | | 44.9 |
| | (A-4) | | | | | | | | | 44.8 |
| (B) Photopolymerization initiator | (B-1) | | | | 2.0 | 2.0 | 1.5 | 1.5 | | |
| | (B-2) | | 2.0 | | | | | | | |
| | (B-3) | | | 2.0 | | | | | | |
| | (B-4) | | | | | | | | 1.0 | |
| | (B-5) | | | | | | | | | 10.0 |
| (C) Upconversion material | (C1) | (C1-1D) | 0.03 | 0.03 | 0.03 | 0.03 | 0.03 | 0.03 | 0.03 | 0.03 |
| | | (C1-1A) | 0.24 | 0.24 | 0.24 | 0.24 | 0.24 | 0.24 | 0.24 | 0.24 |
| | (C2) | (C2-1) | | | | | 50.0 | | | |
| | | (C2-2) | | | | | | 50.0 | | |
| (D) Filler | (D-1) | | | | | | | | | |
| (E) Thixotropic agent | (E-1) | | | | | 0.04 | | | | |
| (F) Light-shielding agent | (F-1) | | | | 0.07 | | | | | |
| | (F-2) | | | | | 0.07 | | | | |
| Curing Test Results | UV light (365 nm) | | ○ | ○ | ○ | ○ | ○ | ○ | ○ | ○ |
| | Visible light (532 nm) | | ○ | ○ | ○ | ○ | ○ | ○ | ○ | ○ |
| | Infrared light (980 nm) | | - | - | - | - | ○ | ○ | - | - |

**Table 1-3**

| | | | Com.Ex.1 | Com.Ex.2 | Com.Ex.3 | Com.Ex.4 | Com.Ex.5 | Com.Ex.6 |
|---|---|---|---|---|---|---|---|---|
| (A) Polymerizable compound | (A-1) | | 98.0 | 74.5 | 95.1 | 73.0 | | |
| | (A-2) | | | | | | 99.0 | |
| | (A-3) | | | | | | | 90.0 |
| | (A-4) | | | | | | | |
| (B) Photopolymerization initiator | (B-1) | | 2.0 | 1.5 | 1.9 | | | |
| | (B-2) | | | | | | | |
| | (B-3) | | | | | | | |
| | (B-4) | | | | | | 1.0 | |
| | (B-5) | | | | | | | 10.0 |
| (C) Upconversion material | (C1) | (C1-1D) | | | 3.0 | 3.0 | | |
| | | (C1-1A) | | 24.0 | | 24.0 | | |
| | (C2) | (C2-1) | | | | | | |
| | | (C2-2) | | | | | | |
| (D) Filler | (D-1) | | | | | | | |
| (E) Thixotropic agent | (E-1) | | | | | | | |
| (F) Light-shielding agent | (F-1) | | | | | | | |
| | (F-2) | | | | | | | |
| Curing Test Results | UV light (365 nm) | | ○ | ○ | ○ | × | ○ | ○ |
| | Visible light (532 nm) | | × | × | × | × | × | × |
| | Infrared light (980 nm) | | - | - | - | - | - | - |

Comparative Examples 1, 5 and 6 are resin compositions that contain a polymerizable compound (A) and a photopolymerization initiator (B), but not an upconversion material (C1). They did not cure under visible light irradiation but cured only under ultraviolet light irradiation. Comparative Examples 2 and 3 resin compositions containing either the donor or acceptor molecule of the triplet-triplet annihilation photon upconversion material (C1). Similar to Comparative Examples 1, they did not cure under visible light irradiation but cured only under ultraviolet light irradiation. Comparative Examples 4 is a resin composition that contains a polymerizable compound (A) and an upconversion material (C1), but not a photopolymerization initiator (B), and it did not cure upon irradiation with ultraviolet and visible light. On the other hand, as shown in Example 1, the resin composition comprising polymerizable compound (A), photopolymerization initiator (B), and upconversion material (C1) containing both donor and acceptor molecules cured not only under ultraviolet light irradiation but also under visible light irradiation.

As shown in Examples 2, 3, 10, 13, and 14, resin compositions containing filler (D), thixotropic agent (E), light-shielding agent (F), or combinations thereof also cured under both ultraviolet irradiation and visible light irradiation. Examples 12 and 13, which used different types of photopolymerization initiator (B), also cured upon irradiation with ultraviolet and visible light. Examples 17 and 18, which used different types of photopolymerization initiator (B), also cured upon irradiation with ultraviolet and visible light.

Examples 15 and 16 are resin compositions containing polymerizable compound (A), a photopolymerization initiator (B), a triplet-triplet annihilation photon upconversion material (C1), and a multiphoton excitation type photon upconversion material (C2), which were cured by irradiation with ultraviolet and visible light as well as infrared light.

### [Experiment Example 2]

In the curing evaluation of the resin composition of Example 7, two slide glasses were replaced with various substrate materials listed in Table 2, and irradiation with ultraviolet light and visible light was carried out. The results are shown in Table 2.

The resin composition cured upon irradiation with ultraviolet light and visible light when placed between 1.0 mm thick Pyrex glass substrates. For FR4 substrates, the resin composition cured upon irradiation with UV light when placed between substrates having thickness of up to 2.0 mm, but did not cure when placed between substrates having thicknesses greater than that. On the other hand, under visible light irradiation, the resin composition fully cured when placed between FR4 substrates having thickness of up to 5.0 mm. Furthermore, when placed between 0.125 mm thick polyimide films, the resin composition did not cure under ultraviolet light irradiation, but cured under visible light irradiation.

**[Table 2]**

| | | Curing Test Results | |
|---|---|---|---|
| | | UV light (365 nm) | Visible light (532 nm) |
| Material | Thickness (mm) | | |
| Pyrex glass | 1.0 | ○ | ○ |
| FR4 | 1.0 | ○ | ○ |
| | 2.0 | ○ | ○ |
| | 3.0 | △ | ○ |
| | 4.0 | × | ○ |
| | 5.0 | × | ○ |
| | 6.0 | × | △ |
| | 7.0 | × | × |
| Polyimide film | 0.1 2 5 | × | ○ |

The disclosure of Japanese Patent Application No. 2023-119225(filing date: July 21, 2023) is incorporated herein by reference in its entirety.

All references, patent applications, and technical standards described herein are incorporated herein by reference to the same extent as if the individual references, patent applications, and technical standards were specifically and individually noted as being incorporated by reference.

## Claims

1. A light-curable resin composition comprising
(A) a polymerizable compound,
(B) a photopolymerization initiator, and
(C) a photon upconversion material.

2. The light-curable resin composition according to claim 1, wherein the (B) photopolymerization initiator is a photopolymerization initiator activated by light having a wavelength of 500 nm or less.

3. The light-curable resin composition according to claim 1 or 2, wherein the (B) photopolymerization initiator is a photo-radical polymerization initiator, a photo-acid generator, a photo-base generator, or any combination thereof.

4. The light-curable resin composition according to any one of claims 1 to 3, wherein an emission wavelength of the (C) photon upconversion material includes a wavelength of 500 nm or less.

5. The light-curable resin composition according to any one of claims 1 to 4, wherein the (A) polymerizable compound is a radical polymerizable compound, a cationic polymerizable compound, an anionic polymerizable compound, or any combination thereof.

6. The light-curable resin composition according to any one of claims 1 to 5, for use in curing by irradiation with light having a wavelength exceeding 500 nm.

7. The light-curable resin composition according to any one of claims 1 to 6, used for an adhesive, a sealant, or a coating agent for a semiconductor device or an electronic component.

8. An adhesive, a sealant, or a coating agent comprising the light-curable resin composition according to any one of claims 1 to 7.

9. A cured product in which the light-curable resin composition according to any one of claims 1 to 7 or the adhesive, the sealant, or the coating agent according to claim 8 has been cured.

10. A semiconductor device or an electronic component comprising the cured product according to claim 9.

11. A method for producing a cured product, comprising irradiating the light-curable resin composition according to any one of claims 1 to 7 or the adhesive, the sealant, or the coating agent according to claim 8 with light having a wavelength exceeding 500 nm.

12. A method for curing a light-curable resin composition, comprising irradiating the light-curable resin composition according to any one of claims 1 to 7 with light having a wavelength exceeding 500 nm.

13. Use of the light-curable resin composition according to any one of claims 1 to 7 for curing by irradiation with light having a wavelength exceeding 500 nm.

14. A method for bonding at least two parts using a light-curable resin composition, comprising:
a step of applying the light-curable resin composition according to any one of claims 1 to 7 to at least one of the at least two parts; and
a step of irradiating the at least one of the at least two parts, the light-curable resin composition, or both thereof with light having a wavelength exceeding 500 nm.

15. A method for sealing a gap between parts or within part(s) using a light-curable resin composition, comprising:
a step of applying or injecting the light-curable resin composition according to any one of claims 1 to 7 into the gap between the parts or within the part(s); and
a step of irradiating the light-curable resin composition with light having a wavelength exceeding 500 nm.

16. A method for coating surface of an object with a light-curable resin composition, comprising:
a step of applying the light-curable resin composition according to any one of claims 1 to 7 to the object; and
a step of irradiating the light-curable resin composition with light having a wavelength exceeding 500 nm.
